# EUROPEAN PATENT SPECIFICATION

(11) **EP 4 411 996 B1**
(45) Date of publication and mention of the grant of the patent: **08.07.2026**
(21) Application number: 22875146.7
(22) Date of filing: 30.09.2022
(51) Int. Cl.: H01R 13/405, H01R 13/58, H01R 13/6591, H01R 13/53, H01R 13/193, H01R 31/08, H01R 13/18, H01R 13/6593

(54) **HIGH-VOLTAGE CONNECTING MECHANISM, ELECTRICAL ENERGY TRANSMISSION APPARATUS, AND MOTOR VEHICLE**
HOCHSPANNUNGSVERBINDUNGSMECHANISMUS, ELEKTRISCHE ENERGIEÜBERTRAGUNGSVORRICHTUNG UND KRAFTFAHRZEUG
MÉCANISME DE CONNEXION À HAUTE TENSION, APPAREIL DE TRANSMISSION D'ÉNERGIE ÉLECTRIQUE ET VÉHICULE À MOTEUR

(30) Priority: 01.10.2021 CN 202111167061; 01.10.2021 CN 202122400679 U
(43) Date of publication of application: 07.08.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2022/123143
(87) International publication number: WO 2023/051765

(56) References cited:
- WO-A1-2015/130011
- CN-A- 109 103 672
- CN-A- 110 416 801
- CN-A- 113 422 255
- CN-A- 113 922 123
- CN-U- 202 221 849
- CN-U- 205 985 587
- CN-U- 217 215 197
- DE-A1- 102016 215 686
- JP-A- H1 140 275
- JP-A- S5 986 170

## Description

### TECHNICAL FIELD

The present disclosure relates to the field of charging technologies, and particularly to a high-voltage connecting mechanism, an electrical energy transmission apparatus and a motor vehicle.

### BACKGROUND

The new energy battery of a new energy automobile uses a charging system for energy supplementation. In the charging system, besides a charging socket, there is a high-voltage connecting mechanism connected to a battery system. A charging harness is the most important unit in a high-voltage system of the electric automobile. The traditional charging harness uses a copper wire as a charging cable, and an end of the copper wire is connected to a plug-in terminal, which is electrically connected to the battery system. At present, the high-voltage connecting mechanisms are all assembled connectors, which have the problems of complicated structures, difficult assembling and high costs. In addition, the high usage amount of copper and the complicated connection processing for the cables and terminals are also the reasons for the high cost of the high-voltage connecting mechanisms.

In addition, in the charging system, a temperature measuring structure is generally mounted on the charging socket rather than a charging harness connector, however, conducting currents are the same, and when the temperature of the charging harness connector rises, it is necessary to monitor and stop the charging operation in time to ensure the safety of the charging harness and the battery system.

Furthermore, a high-voltage cable and a data communication cable are used to conduct current and signals. In order to reduce the influence of the electromagnetic interference, the shielding cable was adopted in the high voltage cable and the data communication cable generally. A shielding layer of the shielding cable at either end thereof is connected to a shielding device and grounded. The shielding cable generally includes a conductive core and a shielding layer sequentially disposed from inside to outside. In order to facilitate the connection with the mating cable or electrical appliance, an end of the cable is usually connected to the connector. The connector is generally not provided with a shielding device for shielding, which leads to a great electromagnetic interference at the position of the connector. A metal cover is disposed inside or outside the connector to achieve a shielding effect. However, the metal cover is difficult to be processed and the cost is high, and the assembly of the metal cover and the connector is also troublesome, which increases the assembly time. Moreover, when the metal cover is inside the connector, a short-circuit with a conductive core will easily occur, which leads to the damage of the shielding layer and even the burning of the cable, resulting in serious accidents.

With the market expansion of the electric automobiles, the charging system is in urgent need of a high-voltage connecting mechanism with a simple structure, a cost advantage and a self-shielding effect, and an electrical energy transmission apparatus.

The high-voltage connecting mechanism, electrical energy transmission apparatus, and motor vehicle are known in the prior art, e.g., form DE102016215686A1, JPS5986170A, WO2015/130011A1 and CN202221849U.

### SUMMARY

The present disclosure aims to provide a high-voltage connecting mechanism, in which a male-end shielding shell and a female-end shielding shell are integrally injection-molded, so that the processing is simple, and the cost is much lower than that of a metal shielding shell. By means of plugging cooperation between the male-end shielding shell and the female-end shielding shell, as well as an electrical connection with a shielding layer of a cable, an electromagnetic interference in the high-voltage connecting mechanism can be effectively shielded, and an electromagnetic interference on other devices can be reduced.

The above objective of the present disclosure can be achieved by adopting the following technical solutions.

The present disclosure provides a high-voltage connecting mechanism, comprising a male-end connecting mechanism and a female-end connecting mechanism, in which the male-end connecting mechanism includes a first cable, a plug-in terminal, a male-end housing integrally formed with the first cable and the plug-in terminal, and a male-end shielding shell disposed outside the male-end housing; the female-end connecting mechanism includes a mating terminal, a second cable, a female-end housing integrally formed with the second cable and the mating terminal, and a female-end shielding shell disposed outside the female-end housing; the male-end connecting mechanism and the female-end connecting mechanism are electrically connected to the mating terminal through the plug-in terminal, the male-end housing is connected to the female-end housing, and the male-end shielding shell is connected to the female-end shielding shell.

In an exemplary embodiment, the first cable includes a first shielding layer, and at least part of the male-end shielding shell is electrically connected to at least part of the first shielding layer; and the second cable includes a second shielding layer, and at least part of the female-end shielding shell is electrically connected to at least part of the second shielding layer.

In an exemplary embodiment, the male-end shielding shell includes a first shielding device, the first cable includes a first shielding layer, the first shielding device is disposed on at least part of an outer periphery of the first shielding layer, and the first shielding layer is electrically connected to the male-end shielding shell through the first shielding device; and the female-end shielding shell includes a second shielding device, the second cable includes a second shielding layer, the second shielding device is disposed on at least part of an outer periphery of the second shielding layer, and the second shielding layer is electrically connected to the female-end shielding shell through the second shielding device.

In an exemplary embodiment, an inner surface of the male-end shielding shell is provided with a first conductive elastic piece, the first cable includes a first shielding layer, and the first conductive elastic piece is connected to the first shielding layer and applies a pressure to the first shielding layer; and an inner surface of the female-end shielding shell is provided with a second conductive elastic piece, the second cable includes a second shielding layer, and the second conductive elastic piece is connected to the second shielding layer and applies a pressure to the second shielding layer.

In an exemplary embodiment, the upward pressure applied by the first conductive elastic piece to the first shielding layer ranges from 0.3 N to 95 N; and the upward pressure applied by the second conductive elastic piece to the second shielding layer ranges from 0.3 N to 95 N.

In an exemplary embodiment, the first cable includes a first shielding layer, an impedance between the male-end shielding shell and the first shielding layer is less than 80 mΩ; and the second cable includes a second shielding layer, and an impedance between the female-end shielding shell and the second shielding layer is less than 80 mΩ.

In an exemplary embodiment, the male-end shielding shell or the female-end shielding shell has a transfer impedance less than 100 mΩ.

In an exemplary embodiment, the plug-in terminal includes a first fixing portion and a plug-in portion which are sequentially disposed, the first fixing portion is electrically connected to an electrically-conductive part of the first cable, and the plug-in portion is sheet-shaped or provided with a first clamping groove.

In an exemplary embodiment, the plug-in portion is sheet-shaped, at least part of which protrudes from the male-end housing, or the male-end housing is provided with a first accommodating cavity and at least part of the plug-in portion protrudes from a bottom surface of the first accommodating cavity without exceeding the male-end housing.

In an exemplary embodiment, at least part of the first clamping groove protrudes from an outer wall of the male-end housing, or the male-end housing is provided with a first open boss, in which at least part of the plug-in portion is disposed.

In an exemplary embodiment, the male-end shielding shell wraps at least part of the male-end housing, the male-end shielding shell is provided with an opening, and the plug-in portion extends from or is located inside the opening.

In an exemplary embodiment, the male-end connecting mechanism includes an interlocking connector, at least part of which is integrally injection-molded in the male-end housing.

In an exemplary embodiment, the mating terminal includes a second fixing portion and a mating portion which are sequentially disposed, the second fixing portion is electrically connected to an electrically-conductive part of the second cable, and the mating portion is sheet-shaped or provided with a second clamping groove; and the plug-in terminal includes a first fixing portion and a plug-in portion which are sequentially disposed, the mating portion is electrically connected to the plug-in portion, and the plug-in portion is sheet-shaped or provided with a first clamping groove.

In an exemplary embodiment, an outer periphery of the first clamping groove or an outer periphery of the second clamping groove is sleeved by a clip, which is made of a memory alloy.

In an exemplary embodiment, a transformation temperature of the memory alloy is set in a range of 40°C to 70°C, when a temperature of the clip is lower than the transformation temperature, the clip is in an expanded state, and when the temperature of the clip is higher than the transformation temperature, the clip is in a clamped state.

In an exemplary embodiment, an outer periphery of the first clamping groove or an outer periphery of the second clamping groove is sleeved by a clip, which includes a sidewall and an elastic element fixed thereon, and the elastic element is in contacted connection with the first clamping groove or the second clamping groove.

In an exemplary embodiment, a force applied by the elastic element to the first clamping groove or the second clamping groove ranges from 3 N to 200 N.

In an exemplary embodiment, the elastic element is an elastic rubber body, a spring or a metal elastic piece.

In an exemplary embodiment, the mating portion is sheet-shaped, and at least part thereof protrudes from the female-end housing, or the female-end housing is provided with a second accommodating cavity, and at least part of the mating portion protrudes from a bottom surface of the second accommodating cavity without exceeding the female-end housing.

In an exemplary embodiment, the mating portion is provided with a second clamping groove, at least part of which protrudes from an outer wall of the female-end housing, or the female-end housing is provided with a second open boss in which at least part of the mating portion is disposed.

In an exemplary embodiment, the plug-in portion or the mating portion is formed by stacking a plurality of layers of terminal laminations, and the plug-in portion is provided with a first clamping groove, which is matched and plugged with the sheet-shaped mating portion; or the mating portion is provided with a second clamping groove, which is matched and plugged with the sheet-shaped plug-in portion.

In an exemplary embodiment, the terminal lamination includes a terminal fixing portion, to which the first clamping groove or the second clamping groove is fixedly connected.

In an exemplary embodiment, adjacent two of the terminal fixing portions are connected together by crimping, welding, screwing, riveting or splicing.

In an exemplary embodiment, adjacent two of the terminal laminations of the first clamping groove or the second clamping groove are in contacted connection.

In an exemplary embodiment, a gap between adjacent two of the terminal laminations of the first clamping groove or the second clamping groove is less than 0.2 mm.

In an exemplary embodiment, the female-end connecting mechanism is provided with a high-voltage interlocking structure, which is electrically connected to the interlocking connector to form a loop.

In an exemplary embodiment, the male-end connecting mechanism and/or the female-end connecting mechanism has a seal structure.

In an exemplary embodiment, the seal structure is secondary injection-molded on the male-end connecting mechanism and/or the female-end connecting mechanism.

In an exemplary embodiment, the male-end connecting mechanism and/or the female-end connecting mechanism has at least one temperature measuring structure configured to measure a temperature of the plug-in terminal and/or the mating terminal.

In an exemplary embodiment, the temperature measuring structure is attached to the plug-in terminal and/or the mating terminal to measure the temperature thereof.

In an exemplary embodiment, the male-end connecting mechanism and the female-end connecting mechanism are connected by one or more of adhesive connection, magnetic attraction connection, bayonet connection, plugging connection, latching connection, binding connection, threaded connection, riveting connection and welding connection.

In an exemplary embodiment, at least part of an outer periphery of the male-end shielding shell or at least part of an outer periphery the female-end shielding shell is injection-molded with a male-end insulation housing or a female-end insulation housing.

In an exemplary embodiment, a plugging force between the plug-in terminal and the mating terminal is between 3 N and 150 N.

In an exemplary embodiment, a plugging force between the plug-in terminal and the mating terminal is between 10 N and 130 N.

In an exemplary embodiment, a contact resistance between the plug-in terminal and the mating terminal is less than 9 mΩ.

In an exemplary embodiment, a contact resistance between the plug-in terminal and the mating terminal is less than 1 mΩ.

In an exemplary embodiment, the number of times of plugging and unplugging between the male-end connecting mechanism and the female-end connecting mechanism is greater than or equal to 10.

In an exemplary embodiment, a weight of the female-end connecting mechanism is less than or equal to 215 g.

In an exemplary embodiment, a height of the female-end connecting mechanism along a plugging and unplugging direction is less than or equal to 276 mm.

In an exemplary embodiment, at least part of a surface of the plug-in terminal and/or the mating terminal is provided with an electrically-conductive anticorrosion layer.

In an exemplary embodiment, an electrically-conductive part of the first cable is integrally formed with the plug-in terminal.

In an exemplary embodiment, an electrically-conductive part of the second cable is integrally formed with the mating terminal.

The present disclosure provides an electrical energy transmission apparatus, including any of the aforementioned high-voltage connecting mechanisms.

The present disclosure provides a motor vehicle, including any of the aforementioned high-voltage connecting mechanisms.

The present disclosure has the following characteristics and advantages:
1. The high-voltage connecting mechanism in the present disclosure is provided with the male-end shielding shell and the female-end shielding shell which are integrally injection-molded, so that the processing is simple, and the cost is much lower than that of a metal shielding shell. By means of plugging cooperation between the male-end shielding shell and the female-end shielding shell, as well as the electrical connection with the shielding layer of the cable, an electromagnetic interference in the high-voltage connecting mechanism can be effectively shielded, and an electromagnetic interference on other devices can be reduced.
2. The male-end shielding shell and the female-end shielding shell in the present disclosure are connected to the shielding layer of the cable in various ways, so that the shielding shell and the shielding layer can be effectively connected, thereby achieving a good shielding effect.
3. The terminal and the cable of the present disclosure are integrally injection-molded in the male-end housing and the female-end housing, and there is no need for works such as terminal plugging, so that the processing procedures and the production cost are reduced. In addition, the male-end housing and the female-end housing which are integrally injection-molded are simple in structure without requiring a high-precision injection mold, and have a good insulation effect owing to the complete sealing.
4. The mating terminal may be plugged and matched with the plug-in terminal, and the plug-in portion or the mating portion is composed of a plurality of layers of terminal laminations in a stacked distribution, with a front end of the sheet-shaped terminal pluggable into the banded groove. In addition, the problem of deformation and elasticity weakening caused by the excessive thickness of the metal plate can be alleviated through the structure of the banded groove, and a large contact area can be realized, thereby ensuring the connection reliability and the electrical conduction effect. The mating terminal and the plug-in terminal can ensure the stability of the clamping structure, reduce the deformation and increase the strength of the plugged structure.
5. The embedded high-voltage interlocking structure replaces the traditional assembled high-voltage interlocking structure, and is fixed in the connector by integral injection-molding without assembling, so that the cost is reduced and the high-voltage interlocking effect is completely satisfied.
6. The seal structure of the connector is no longer a separate seal ring, but adopts a secondarily injection-molded seal structure to replace the traditional seal ring, so as to be directly molded on the connector, and achieve a better injection bonding and a lower cost.
7. By adopting the temperature measuring structure, it is possible to separately monitor the terminal temperature inside the connector, and avoid the situation that the temperature of the connector cannot be monitored due to the damage of the temperature sensors in other positions.

### BRIEF DESCRIPTION OF THE DRAWINGS

FIG. 1 illustrates an assembly diagram of a high-voltage connecting mechanism in the present disclosure.
FIG. 2 illustrates an assembly diagram of a female-end connecting mechanism in the present disclosure.
FIG. 3 illustrates a structural diagram of a female-end housing in the present disclosure.
FIG. 4 illustrates a schematic diagram of an assembly structure of a second cable and a mating terminal in the present disclosure.
FIG. 5 illustrates an assembly diagram of a male-end connecting mechanism in the present disclosure.
FIG. 6 illustrates a structural diagram of a male-end shielding shell in the present disclosure.
FIG. 7 illustrates a structural diagram of a male-end housing in the present disclosure.
FIG. 8 illustrates a schematic diagram of an assembly structure of a first cable and a plug-in terminal in the present disclosure.
FIG. 9 illustrates a structural diagram of an interlocking connector of the present disclosure.
FIG. 10 illustrates a schematic diagram of a high-voltage interlocking structure in the present disclosure.
FIG. 11 illustrates a cross-sectional view of a male-end connecting mechanism or a female-end connecting mechanism not according to the invention.
FIG. 12 illustrates another cross-sectional view of a male-end connecting mechanism or a female-end connecting mechanism not according to the invention.
FIG. 13 illustrates another cross-sectional view of a male-end connecting mechanism or a female-end connecting mechanism in the present disclosure.
FIG. 14 illustrates a structural diagram of a plug-in terminal and a mating terminal in the present disclosure.
FIG. 15 illustrates a structural diagram of a clip in the present disclosure.
FIG. 16 illustrates a cross-sectional view of an assembly of a male-end connecting mechanism and a female-end connecting mechanism in the present disclosure.
FIG. 17 illustrates another cross-sectional view of an assembly of a male-end connecting mechanism and a female-end connecting mechanism in the present disclosure.

In which,
10: male-end connecting mechanism; 11: first cable; 12: plug-in terminal; 13: male-end housing; 14: male-end shielding shell; 121: first fixing portion; 122: plug-in portion; 1221: first clamping groove; 15: interlocking connector; 16: male-end insulation housing;
20: female-end connecting mechanism; 21: second cable; 22: mating terminal; 23: female-end housing; 24: female-end shielding shell; 221: second fixing portion; 222: mating portion; 2221: second clamping groove; 25: high-voltage interlocking structure; 26: female-end insulation housing;
31: first shielding layer; 32: first shielding device; 33: first conductive elastic piece; 34: second shielding layer; 35: second shielding device; 36: second conductive elastic piece;
40: terminal fixing portion;
50: clip; 51: sidewall; 52: elastic element;
60: seal structure.

### DETAILED OF THE EMBODIMENTS

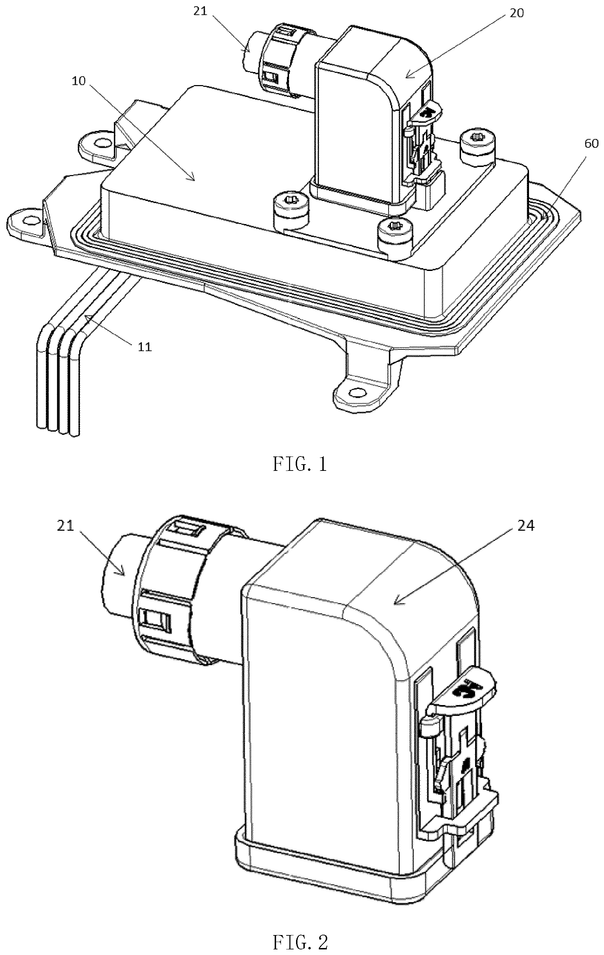

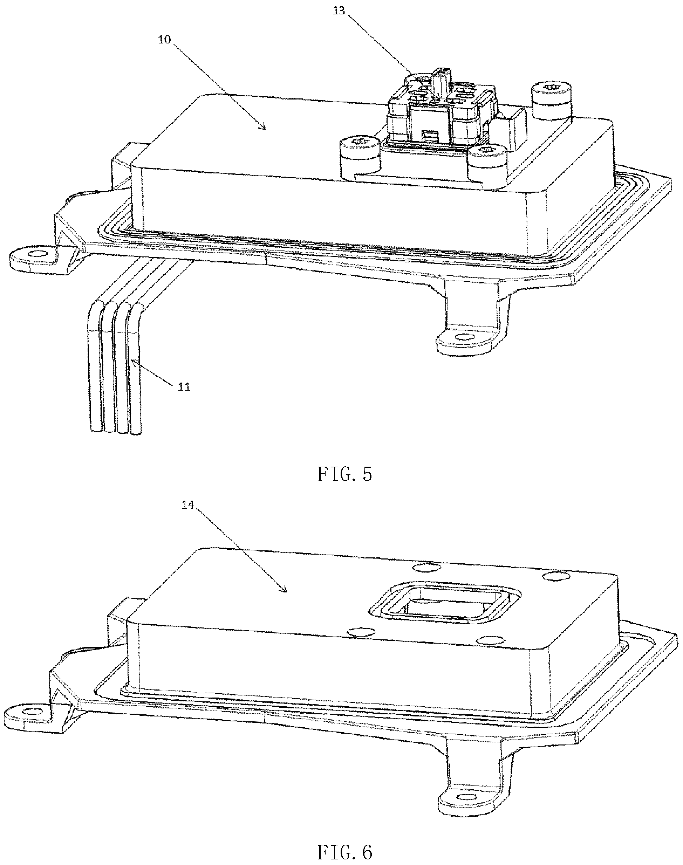

A high-voltage connecting mechanism includes a male-end connecting mechanism 10 and a female-end connecting mechanism 20, in which the male-end connecting mechanism 10 includes a first cable 11, a plug-in terminal 12, a male-end housing 13 integrally formed with the first cable 11 and the plug-in terminal 12, and a male-end shielding shell 14 disposed outside the male-end housing 13; the female-end connecting mechanism 20 includes a second cable 21, a mating terminal 22, a female-end housing 23 integrally formed with the second cable 21 and the mating terminal 22, and a female-end shielding shell 24 disposed outside the female-end housing 23; the male-end connecting mechanism 10 and the female-end connecting mechanism 20 are electrically connected to the mating terminal 22 through the plug-in terminal 12, the male-end housing 13 is connected to the female-end housing 23, and the male-end shielding shell 14 is connected to the female-end shielding shell 24, as illustrated in FIGS. 1 to 7.

The high-voltage connecting mechanism in the present disclosure is provided with the male-end shielding shell 14 and the female-end shielding shell 24 which are integrally injection-molded, so that the processing is simple, and the cost is much lower than that of a metal shielding shell. By means of plugging cooperation between the male-end shielding shell 14 and the female-end shielding shell 24, as well as the electrical connection with the shielding layer of the cable, an electromagnetic interference in the high-voltage connecting mechanism can be effectively shielded, and an electromagnetic interference on other devices can be reduced.

In some embodiments, the plug-in terminal 12 or the mating terminal 22 is made of a metal conductive material which includes one or more of nickel, cadmium, zirconium, chromium, cobalt, manganese, aluminum, tin, titanium, zinc, copper, silver, gold, phosphorus, tellurium, beryllium and lead, which are stable in properties and good in electrical conductivity, and exemplarily the material includes copper or copper alloy or aluminum or aluminum alloy.

In some embodiments, the material of an electrically-conductive part of the first cable 11 or the second cable 21 include one or more of aluminum, phosphorus, tin, copper, iron, manganese, chromium, titanium and lithium, in which the material of the electrically-conductive part of the cable includes aluminum or aluminum alloy, which is one of the main means for energy saving and cost reduction recently. In the field of electrical connections, the copper conductor is used for current conduction since copper has high conductivity and good ductility. However, due to the increasing price of copper, the material cost of the conductor made of copper is higher and higher. To this end, people begin to look for alternatives to copper to reduce the cost. The content of metallic aluminum in the earth's crust is about 7.73%, and after the optimization of the refining technology, the price thereof is relatively low. In addition, compared with copper, aluminum is lighter, and its conductivity is second only to copper, so that aluminum can partially replace copper in the field of electrical connections. Therefore, replacing copper with aluminum is the development trend in the field of electrical connections of automobiles.

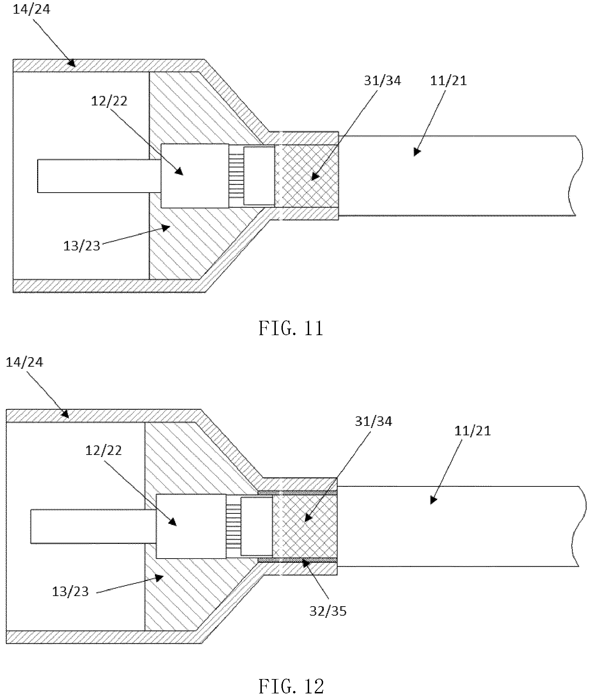

In an embodiment not according to the invention, the first cable 11 includes a first shielding layer 31, and at least part of the male-end shielding shell 14 is electrically connected to at least part of the first shielding layer 31; the second cable 21 includes a second shielding layer 34, and at least part of the female-end shielding shell 24 is electrically connected to at least part of the second shielding layer 34, as illustrated in FIG. 11.

In a high-voltage shielding connector, since large current is to be transmitted by the first cable 11 and the second cable 21, a large electromagnetic field will be generated around the cable when the current passes. In order to prevent the electromagnetic field generated by the large current from electromagnetically interfering with the electrical appliances in the ambient environment and affecting the normal work of other electrical appliances, the first shielding layer 31 and the second shielding layer 34 are disposed outside conductive cores of the first cable 11 and the second cable 21, respectively, to electromagnetically shield the electromagnetic field generated after the first cable 11 and the second cable 21 are electrified.

Further, the first cable 11 includes a first shielding layer 31, and at least part of the male-end shielding shell 14 is electrically connected to at least part of the first shielding layer 31; the second cable 21 includes a second shielding layer 34, and at least part of the female-end shielding shell 24 is electrically connected to at least part of the second shielding layer 34, as illustrated in FIGS. 11 to 13.

At least part of the male-end shielding shell 14 is electrically connected to at least part of the first shielding layer 31, and at least part of the female-end shielding shell 24 is electrically connected to at least part of the second shielding layer 34, to form a closed electromagnetic shielding structure, which can optimize the electromagnetic shielding effect, thereby effectively controlling the radiation of electromagnetic waves and achieving a good shielding effect.

In an embodiment not according to the invention, the male-end shielding shell 14 includes a first shielding device 32, the first cable 11 includes a first shielding layer 31, the first shielding device 32 is disposed on at least part of an outer periphery of the first shielding layer 31, and the first shielding layer 31 is electrically connected to the male-end shielding shell 14 through the first shielding device 32; the female-end shielding shell 24 includes a second shielding device 35, the second cable 21 includes a second shielding layer 34, the second shielding device 35 is disposed on at least part of an outer periphery of the second shielding layer 34, and the second shielding layer 34 is electrically connected to the female-end shielding shell 24 through the second shielding device 35, as illustrated in FIG. 12.

The first shielding layer 31 or the second shielding layer 34 may be a shielding net or an electrically-conductive foil. The first shielding layer 31 or the second shielding layer 34 is a flexible structure, while the male-end shielding shell 14 or the female-end shielding shell 24 is usually a rigid structure, and when they are in contact, due to the deformation of the first shielding layer 31 or the second shielding layer 34, the male-end shielding shell 14 is temporarily disconnected from the first shielding layer 31, or the female-end shielding shell 24 is temporarily disconnected from the second shielding layer 34, so that the impedance at a contact position changes, which leads to the unstable shielding effect of the connection structure of the first shielding layer 31 of the first cable 11 and the male-end shielding shell 14, or the connection structure of the second shielding layer 34 of the second cable 21 and the female-end shielding shell 24, thereby affecting the signal transmission. Therefore, it is necessary to achieve a stable connection between the first shielding layer 31 and the first shielding device 32 and the second shielding device 35 and the second shielding layer 34 are in stable connection, and the first shielding device 32 or the second shielding device 35 generally should be a rigid structure, so as to form a good electrical connection with the male-end shielding shell 14 or the female-end shielding shell 24, thereby achieving a stable shielding effect.

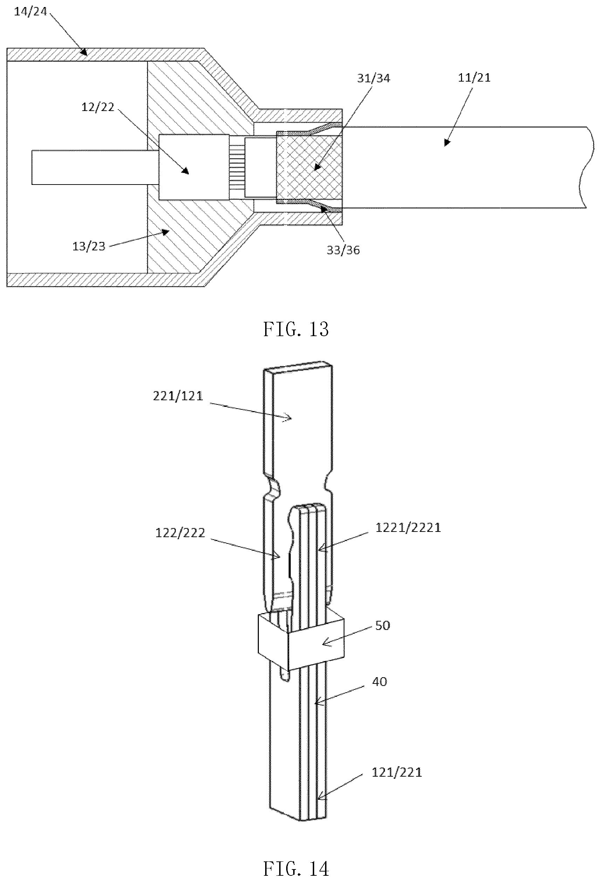

In an embodiment not according to the invention, an inner surface of the male-end shielding shell 14 is provided with a first conductive elastic piece 33, the first cable 11 includes a first shielding layer 31, and the first conductive elastic piece 33 is connected to the first shielding layer 31 and applies a pressure to the first shielding layer 31. An inner surface of the female-end shielding shell is provided with a second conductive elastic piece 36, the second cable 21 includes a second shielding layer 34, and the second conductive elastic piece 36 is connected to the second shielding layer 34 and applies a pressure to the second shielding layer 34, as illustrated in FIG. 13.

The male-end shielding shell 14 is connected to the first shielding layer 31 through the first conductive elastic piece 33, and the female-end shielding shell 24 is connected to the second shielding layer 34 through the second conductive elastic piece 36. At least parts of the first conductive elastic piece 33 and the second conductive elastic piece 36 are elastic, and the parts have a trend to contract inward to compress the first cable 11 or the second cable 21, so that on the one hand, it is possible to ensure the stability of the electrical connection between the male-end shielding shell 14 and the first shielding layer 31, and the stability of the electrical connection between the female-end shielding shell 24 and the second shielding layer 34; and on the other hand, the first cable 11 can be in contacted connection with the first conductive elastic piece 33 after being inserted into the male-end shielding shell 14, and the second cable 21 can be in contacted connection with the second conductive elastic piece 36 after being inserted into the female-end shielding shell 24, thereby saving the assembly and processing time, as illustrated in FIGS. 11 to 13.

Further, the upward pressure applied by the first conductive elastic piece 33 to the first shielding layer 31 ranges from 0.3 N to 95 N; and the upward pressure applied by the second conductive elastic piece 36 to the second shielding layer 34 ranges from 0.3 N to 95 N.

In order to verify the influence of the upward pressure applied by the first conductive elastic piece 33 to the first shielding layer 31 on the contact resistance between the first conductive elastic piece 33 and the first shielding layer 31, or the influence of the upward pressure applied by the second conductive elastic piece 36 to the second shielding layer 34 on the contact resistance between the second conductive elastic piece 36 and the second shielding layer 34, the inventor carries out targeted tests. Taking the pressure applied by the first conductive elastic piece 33 to the first shielding layer 31 as an example, the inventor selects the first conductive elastic piece 33 and the first shielding layer 31 with the same shape and size, and designs different pressures between the first conductive elastic piece 33 and the first shielding layer 31 to observe the contact resistance therebetween.

**Table 1: Influence of different pressures between the conductive elastic piece and the shielding layer on the contact resistance**

| Pressure applied by the first conductive elastic piece 33 to the first shielding layer 31 (N) | | | | | | | | | | | | | | | | | |
|---|---|---|---|---|---|---|---|---|---|---|---|---|---|---|---|---|---|
| 0.1 | 0.2 | 0.3 | 0.5 | 1 | 5 | 10 | 20 | 30 | 40 | 50 | 60 | 70 | 80 | 90 | 95 | 100 | 105 |

| Contact resistance (µΩ) | | | | | | | | | | | | | | | | | |
|---|---|---|---|---|---|---|---|---|---|---|---|---|---|---|---|---|---|
| 63 | 57 | 49 | 42 | 40 | 38 | 35 | 33 | 30 | 26 | 22 | 18 | 13 | 12 | 11 | 10 | 10 | 9 |

The test method of the contact resistance is to adopt a micro-ohmmeter to measure the resistance at the contact position between the first conductive elastic piece 33 and the first shielding layer 31, and read the value on the micro-ohmmeter. In this embodiment, the contact resistance less than 50 µΩ is an ideal value.

As can be seen from Table 1, when the pressure between the first conductive elastic piece 33 and the first shielding layer 31 is less than 0.3 N, the contact resistance between them is higher than the ideal value because the bonding force is too small, which does not meet the requirement. When the pressure between the first conductive elastic piece 33 and the first shielding layer 31 is greater than 95 N, the contact resistance does not decrease obviously, but the material selection and processing are more difficult, and the first shielding layer 31 will be damaged if the pressure is too high. Therefore, the inventor sets the upward pressure applied by the first conductive elastic piece 33 to the first shielding layer 31 to range from 0.3 N to 95 N; and the upward pressure applied by the second conductive elastic piece 36 to the second shielding layer 34 ranges from 0.3 N to 95 N.

In addition, the inventor finds that when the pressure between the first conductive elastic piece 33 and the first shielding layer 31 is greater than 0.5 N, the contact resistance value therebetween is good, and the decreasing trend is very fast. When the pressure between the first conductive elastic piece 33 and the first shielding layer 31 is less than 50 N, it is convenient to manufacture, mount and use the conductive elastic piece with a low cost. Therefore, the inventor selects that the upward pressure applied by the first conductive elastic piece 33 to the first shielding layer 31 ranges from 0.5 N to 50 N; and the upward pressure applied by the second conductive elastic piece 36 to the second shielding layer 34 ranges from 0.5 N to 50 N.

In an embodiment, the connection mode between the first conductive elastic piece 33 and the male-end shielding shell 14, and the connection mode between the second conductive elastic piece 36 and the female-end shielding shell 24 may be welding, adhesion, integral injection-molding, embedding or clamping.

The welding includes laser welding, ultrasonic welding, resistance welding, pressure diffusion welding, soldering, etc. The welding uses the concentrated heat energy or pressure to achieve a fused connection between the first conductive elastic piece 33 and the inner surface of the male-end shielding shell 14, or between the second conductive elastic piece 36 and the inner surface of the female-end shielding shell 24. The welding achieves a stable connection, and can also realize the connection between different materials. Since the contacted parts are fused, the electrical conduction effect is better.

The adhesion is to use an electrically-conductive adhesive to adhere the first conductive elastic piece 33 and the inner surface of the male-end shielding shell 14 together, or adhere the second conductive elastic piece 36 and the inner surface of the female-end shielding shell 24 together. In this way, no device is needed, and through the conductive adhesive, the first conductive elastic piece 33 and the inner surface of the male-end shielding shell 14 can be fully electrically connected, or the second conductive elastic piece 36 and the inner surface of the female-end shielding shell 24 can be fully electrically connected. The electrical conduction is good, but the connection strength is low, so the adhesion is suitable for a use environment where the connection strength is not required to be high, with a low melting point or strength of the connection between the first conductive elastic piece 33 and the inner surface of the male-end shielding shell 14 or between the second conductive elastic piece 36 and the inner surface of the female-end shielding shell 24.

The integrated injection-molding is that the first conductive elastic piece 33 or the second conductive elastic piece 36 is put into an injection-mold, and when the connector is processed, the first conductive elastic piece 33 is directly injected on the inner surface of the male-end shielding shell 14, or the second conductive elastic piece 36 is directly injected on the female-end shielding shell 24. The processing is simple and quick, and there is no other assembly process, thereby saving the assembly time.

The embedding is to dispose a groove on the inner surface of the male-end shielding shell 14 or the inner surface of the female-end shielding shell 24, and then embed the first conductive elastic piece 33 or the second conductive elastic piece 36 into the groove, so as to fix the first conductive elastic piece 33 on the inner surface of the male-end shielding shell 14, or fix the second conductive elastic piece 36 on the inner surface of the female-end shielding shell 24.

The clamping is to dispose a claw or slot on the inner surface of the male-end shielding shell 14 or the inner surface of the female-end shielding shell 24, and dispose a corresponding slot or claw on the first conductive elastic piece 33 or the second conductive elastic piece 36, then assemble the claw and the slot, so as to fix the first conductive elastic piece 33 on the inner surface of the male-end shielding shell 14, or fix the second conductive elastic piece 36 on the inner surface of the female-end shielding shell 24.

The male-end shielding shell 14 and the female-end shielding shell 24 in the present disclosure are connected to the shielding net of the cable in various ways, so that the shielding shell can be stably and effectively connected to the shielding net, thereby achieving a better shielding effect.

In an embodiment, the first cable 11 includes a first shielding layer 31, and an impedance between the male-end shielding shell 14 and the first shielding layer 31 is less than 80 mΩ; and the second cable 21 includes a second shielding layer 34, and an impedance between the female-end shielding shell 24 and the second shielding layer 34 is less than 80 mΩ.

The impedance between the male-end shielding shell 14 and the first shielding layer 31, and the impedance between the female-end shielding shell 24 and the second shielding layer 34 should be as small as possible, so that the current generated by the first shielding layer 31 and the second shielding layer 34 can flow back to an energy source or a grounding position without hindrance. If the impedance between the male-end shielding shell 14 and the first shielding layer 31, and the impedance between the female-end shielding shell 24 and the second shielding layer 34 are large, large current may be generated between the male-end shielding shell 14 and the first shielding layer 31 or between the female-end shielding shell 24 and the second shielding layer 34, thereby causing a large radiation at the connection position between the first cable 11 and the plug-in terminal 12 or between the second cable 21 and the mating terminal 22.

Taking the influence of the impedance between the male-end shielding shell 14 and the first shielding layer 31 on the shielding effect of the male-end connecting mechanism 10 as an example, the inventor selects the first cable 11 and the plug-in terminal 12 with the same specification, and different impedances between the male-end shielding shell 14 and the male-end shielding shell 14 to make a series of samples of the connection structure of the male-end connecting mechanism 10, and seals an opening of the male-end shielding shell 14 with a metal shielding device to ensure that the whole male-end shielding shell 14 is in a completely shielded state, so as to test the shielding effects of the connection structure of the male-end shielding shell 14 and the first shielding layer 31 respectively and the experimental results are shown in Table 2. In this embodiment, a shielding performance value greater than 40 dB is an ideal value.

The test method of the shielding performance value is to adopt a test instrument that outputs a signal value (which is test value 2) to the first cable 11, and dispose a detection device which detects a signal value (which is test value 1) outside the male-end connecting mechanism 10. The shielding performance value = test value 2 - test value 1.

**Table 2: Influence of the impedance between the male-end shielding shell 14 and the male-end shielding shell 14 on the shielding performance**

| Test parameter | Impedance between the male-end shielding shell 14 and the first shielding layer 31 (mΩ) | | | | | | | | | | |
|---|---|---|---|---|---|---|---|---|---|---|---|
| | 5 | 10 | 20 | 30 | 40 | 50 | 60 | 70 | 80 | 90 | 100 |
| Shielding performance value (dB) | 75 | 74 | 70 | 66 | 63 | 58 | 55 | 47 | 41 | 35 | 29 |

As can be seen from Table 2, when the impedance value between the male-end shielding shell 14 and the first shielding layer 31 is greater than 80 mΩ, the shielding performance value of the male-end connecting mechanism 10 is less than 40 dB, which does not meet the requirement of the ideal value. However, when the impedance value between the male-end shielding shell 14 and the first shielding layer 31 is less than 80 mΩ, all of the shielding performance values of the male-end connecting mechanism 10 meet the requirement of the ideal value, and the trend is increasingly better. Similarly, the test effect of the female-end shielding shell 24 is the same as that of the male-end shielding shell 14. Therefore, the inventor sets that the first cable 11 includes the first shielding layer 31, and the impedance between the male-end shielding shell 14 and the first shielding layer 31 is less than 80 mΩ; the second cable 21 includes the second shielding layer 34, and the impedance between the female-end shielding shell 24 and the second shielding layer 34 is less than 80 mΩ.

In an embodiment, the male-end shielding shell 14 or the female-end shielding shell 24 has a transfer impedance less than 100 mΩ. The transfer impedance is usually used to represent the shielding effect of the male-end shielding shell 14 or the female-end shielding shell 24. The shielding effect gets better as the transfer impedance decreases. The transfer impedance of the male-end shielding shell 14 or the female-end shielding shell 24 is defined as a ratio of a differential mode voltage U induced by a shield per unit length to current IS passing through a surface of the shield, that is:

ZT=U/IS, so it can be understood that the transfer impedance of the male-end shielding shell 14 or the female-end shielding shell 24 converts the current thereof into a differential mode interference. The transfer impedance should be as small as possible, i.e., a better shielding performance can be obtained by reducing the differential mode interference conversion.

In order to verify the influence of different transfer impedances of the male-end shielding shell 14 or the female-end shielding shell 24 on the shielding effect of the connection structure of the high-voltage connecting mechanism, the inventor selects the first cable 11 and the plug-in terminal 12 with the same specification, makes a series of samples of the connection structure of the male-end connecting mechanism 10 by using the male-end shielding shells 14 with different transfer impedances, and seals the opening of the male-end shielding shell 14 with a metallic shielding device to ensure that the whole male-end shielding shell 14 is in a completely shielded state, so as to test the shielding effects of the connection structure of the male-end shielding shell 14 and the first shielding layer 31 respectively, and the experimental results are shown in Table 3. In this embodiment, the shielding performance value greater than 40 dB is an ideal value.

The test method of the shielding performance value is that a test instrument outputs a signal value (which is test value 2) to the first cable 11, and dispose a detection device which detects a signal value (which is test value 1) outside the male-end connecting mechanism 10. The shielding performance value = test value 2 - test value 1.

**Table 3: Influence of the transfer impedance of the male-end shielding shell 14 on the shielding performance**

| Test parameter | Transfer impedance of the male-end shielding shell 14 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 75 | 72 | 67 | 63 | 58 | 54 | 48 | 43 | 33 | 27 |

As can be seen from Table 3, when the transfer impedance of the male-end shielding shell 14 is greater than 100 mΩ, the shielding performance value of the male-end connecting mechanism 10 is less than 40 dB, which does not meet the requirement of the ideal value. When the transfer impedance of the male-end shielding shell 14 is less than 100 mΩ, all of the shielding performance values of the male-end shielding shell 14 meet the requirement of the ideal value, and the trend is increasingly better. Similarly, the test effect of the female-end shielding shell 24 is the same as that of the male-end shielding shell 14. Therefore, the inventor sets the transfer impedance of either the male-end shielding shell 14 or the female-end shielding shell 24 to be less than 100 mΩ.

In an embodiment, the material of the male-end shielding shell 14 or the female-end shielding shell 24 includes one or combinations of an electrically-conductive ceramic, a carbon-containing conductor, a solid electrolyte, a mixed conductor and an electrically-conductive polymer material.

In order to verify the influence of different materials on the electrical conductivity of the male-end shielding shell 14 or the female-end shielding shell 24, the inventor takes the male-end shielding shell 14 as an example, and makes samples of the male-end shielding shell 14 using different materials of the same size to test the electrical conductivity of the male-end shielding shell 14. The experimental results are shown in Table 4. In this embodiment, the electrical conductivity of the male-end shielding shell 14 greater than 99% is an ideal value.

**Table 4: Influence of different materials on the electrical conductivity of the male-end shielding shell 14**

| Different materials | Electrically-conductive ceramic | Carbon-containing conductor | Solid electrolyte | Mixed conductor | Electrically-conductive polymer material |
|---|---|---|---|---|---|
| Electrical conductivity of the male-end shielding shell | 99.3% | 99.6% | 99.6% | 99.4% | 99.6% |

As can be seen from Table 4, the electrical conductivity of the male-end shielding shell 14 made of any of the selected materials is within the range of the ideal value, so the inventor sets that the male-end shielding shell 14 is made of one or combinations of the electrically-conductive ceramic, the carbon-containing conductor, the solid electrolyte, the mixed conductor and the electrically-conductive polymer material.

Further, the carbon-containing conductor includes one or more of graphite powder, a carbon nanotube material and a graphene material.

Further, the electrically-conductive polymer material is a polymer material including metal particles, which are made of one or more of nickel, cadmium, zirconium, chromium, cobalt, manganese, aluminum, tin, titanium, zinc, copper, silver, gold, phosphorus, tellurium and beryllium. The polymer material includes one or more of polyvinyl chloride, polyethylene, polyamide, polytetrafluoroethylene, tetrafluoroethylene/hexafluoropropylene copolymer, ethylene/tetrafluoroethylene copolymer, polypropylene, polyvinylidene fluoride, polyurethane, polyterephthalic acid, polyurethane elastomer, styrene block copolymer, perfluoroalkoxy alkane, chlorinated polyethylene, polyphenylene sulfide, polystyrene, silicone rubber, cross-linked polyolefin, ethylene-propylene rubber, ethylene/vinyl acetate copolymer, chloroprene rubber, natural rubber, styrene-butadiene rubber, nitrile rubber, cis-polybutadiene, isoprene rubber, ethylene propylene rubber, chloroprene rubber, butyl rubber, fluororubber, polyurethane rubber, polyacrylate rubber, chlorosulfonated polyethylene rubber, epichlorohydrin rubber, chlorinated polyethylene rubber, chlorosulfide rubber, styrene butadiene rubber, butadiene rubber, hydrogenated nitrile rubber, polysulfide rubber, crosslinked polyethylene, polycarbonate, polysulfone, polystyrene, polyester, phenolic resin, urea formaldehyde, styrene-propylene copolymer, polymethacrylate and polyoxymethylene resin.

The characteristics of the material are illustrated below.

Polyoxymethylene is a kind of hard and dense material with a smooth and shiny surface, which is yellowish or white and can be used for a long time in a temperature range of -40°C to 100°C. Polyoxymethylene has a wear resistance and a self-lubrication superior to those of most engineering plastics, and also has good oil resistance and peroxide resistance.

Polycarbonate is colorless, transparent, heat-resistant and impact-resistant with a flame-retardant grade BI, and has good mechanical properties under an ordinary use temperature. Compared with polymethyl methacrylate with similar properties, polycarbonate has a good impact resistance, a high refractive index and a good processability, and achieves a very high flame retardant performance without additives.

Polyamide is nontoxic and light, with an excellent mechanical strength and good wear resistance and corrosion resistance. Polyamide can be used to replace metals such as copper to manufacture parts such as bearings, gears and pump blades in the industries of machinery, chemicals, instruments, automobiles, etc.

In an embodiment, the male-end shielding shell 14 or the female-end shielding shell 24 is manufactured by performing one or more of an extrusion process, an extrusion process, an injection-molding process, a plastic dipping process, a blow molding process, a foaming process, a spraying process, a printing process and a 3D printing process on the electrically-conductive polymer material.

The injection-molding process refers to a process of making a semi-finished part with a certain shape by pressing, injecting, cooling and demolding molten raw materials.

The plastic dipping process refers to a process of heating a workpiece to a certain temperature, and then dipping it into a dipping solution so that the dipping solution is solidified on the workpiece.

The blow molding process is to extrude a tubular parison with an extruder, put the tubular parison into a mold while it is hot, and introduce compressed air to inflate the tubular parison to make it reach the shape of a mold cavity, and then obtain a product after cooling and shaping. The advantages are that the blow molding process is suitable for various plastics, capable of producing large-scale products, and has a high production efficiency, a uniform parison temperature and a small device investment.

The foaming process is to form a honeycomb or porous structure through the addition and reaction of a physical foaming agent or a chemical foaming agent in a foaming molding procedure or a foamed polymer material. The basic steps of the foaming molding include a formation of bubble nucleus, a growth or expansion of the bubble nucleus and a stabilization of the bubble nucleus. At the given temperature and pressure, the solubility of gas decreases to reach a saturation state, so that the excess gas is exhausted and bubbles are formed, thereby realizing nucleation.

The spraying process is a coating method in which a spraying material is dispersed into uniform and fine droplets by means of a pressure or a centrifugal force through a spray gun or a disc atomizer, and then applied to a surface of an object to be coated. The spraying process may be classified into air spraying, airless spraying, electrostatic spraying and various derivatives of the above basic spraying forms.

The printing process means using a printing plat to transfer ink or any other viscous fluid material to a surface of an object to be coated, including screen printing, letterpress printing, flexographic printing, gravure printing or planographic printing.

The 3D printing process is one of the rapid prototyping technologies, also known as additive manufacturing. The 3D printing process is a technology based on digital model files, which uses adhesive materials such as powdered metal or plastic to construct an object by printing layer by layer.

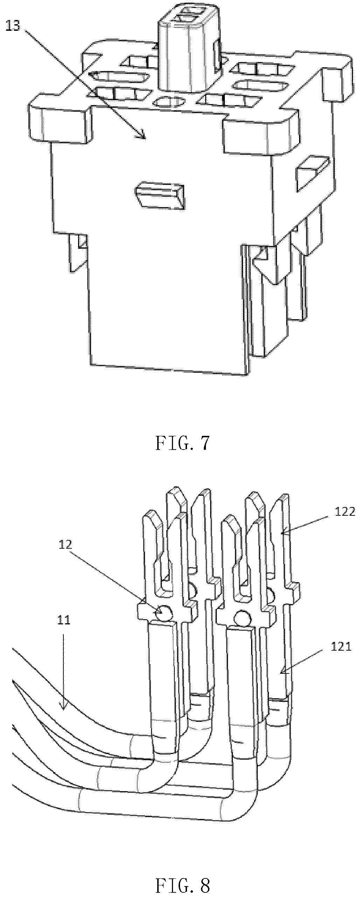

In an embodiment, the plug-in terminal 12 includes a first fixing portion 121 and a plug-in portion 122 which are sequentially disposed, the first fixing portion 121 is electrically connected to an electrically-conductive part of the first cable 11, and the plug-in portion 122 is sheet-shaped or provided with a first clamping groove 1221, as illustrated in FIGS. 8 and 14. The first fixing portion 121 is electrically connected to the electrically-conductive part of the first cable 11 to conduct current. The plug-in portion 122 of the plug-in terminal 12 is in plugged connection with the mating terminal 22, so as to realize an electrical connection and a current conduction between the connectors.

Specifically, the first fixing portion 121 is connected to the electrically-conductive part at a front end of the first cable 11 by one or more of resistance welding, friction welding, ultrasonic welding, arc welding, laser welding, electron beam welding, pressure diffusion welding, magnetic induction welding, screwing, clamping, splicing and crimping.

The resistance welding refers to a method of welding by causing strong current to pass through a contact point between an electrode and a workpiece and generating heat by a contact resistance. The first fixing portion 121 and the first cable 11 are welded by the resistance welding.

The friction welding refers to a method of welding by taking heat generated by the friction between contact surfaces of workpieces as a heat source to plastically deform the workpieces under pressure. The first fixing portion 121 and the first cable 11 are welded by the friction welding.

The ultrasonic welding is to transmit high-frequency vibration waves to the surfaces of two objects to be welded, so that under pressure, the surfaces of the two objects rub against each other to fuse molecular layers. The first fixing portion 121 and the first cable 11 are welded by the ultrasonic welding.

The arc welding is to convert electrical energy into heat energy and mechanical energy required for welding by taking an electric arc as a heat source and utilizing the physical phenomenon of air discharge, so as to connect metals. The arc welding mainly includes shielded metal arc welding, submerged arc welding, gas shielded welding, etc.

The laser welding is an efficient and precise welding method by taking a laser beam of a high energy density as a heat source.

The electron beam welding is to use accelerated and focused electron beams to bombard welding surfaces placed in vacuum or non-vacuum, so that the workpieces to be welded can be melted to realize welding.

The pressure welding is a method of applying a pressure to the workpieces to be welded to make joint surfaces closely contact and produce certain plastic deformation to complete the welding.

The diffusion welding refers to a solid-state welding method that pressurizes the workpieces at a high temperature without visible deformation and relative movement.

The magnetic induction welding means that two workpieces to be welded are subjected to instantaneous high-speed collision under the action of a strong pulse magnetic field, and the atoms of two materials meet within an inter-atomic distance under the action of high-voltage waves on the surfaces of the materials, thereby forming a stable metallurgical bonding on the interface. The magnetic induction welding is a kind of solid-state cold welding, and can weld the first fixing portion 121 and the first cable 11 with similar or dissimilar properties together.

The screwing refers to a threaded connection, which is a detachable connection in which a threaded piece (or the threaded part of a piece to be connected) is used to connect the pieces to be connected into a whole. The conventional threaded connecting pieces include a bolt, a stud, a screw, a set screw, etc., mostly of which are standard parts.

The clamping means that the connecting end and the connecting surface are provided with a corresponding claw or slot, respectively, and an assembly is made by connecting the slot and the claw together. The clamping has the advantages of quick connection and detachability.

The splicing means that the connecting end and the connecting surface are provided with a corresponding groove and protrusion, respectively, and an assembly is made by connecting the groove and the protrusion together by means of tenoning or splicing. The splicing has the advantages of stable connection and detachability.

The crimping is a production process in which the connecting end and the connecting surface are assembled and then stamped into a whole using a crimping machine. The crimping has the advantage of mass production, and by adopting an automatic crimping machine, products with a stable quality can be rapidly manufactured in large quantities.

Based on the above connection modes, an appropriate connection mode or combination thereof can be selected according to the actual use environment and the actual use state of the first fixing portion 121 and the first cable 11, so as to realize an effective electrical connection.

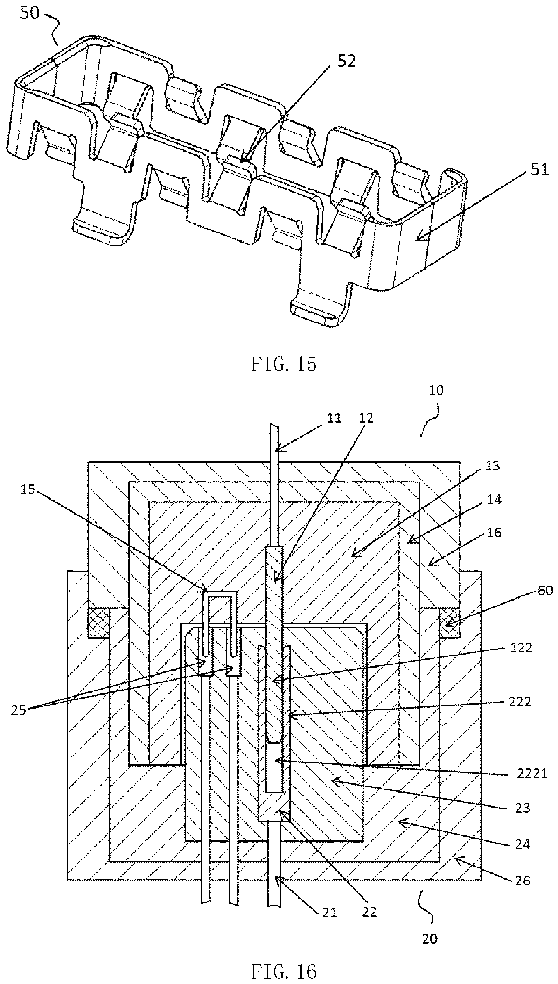

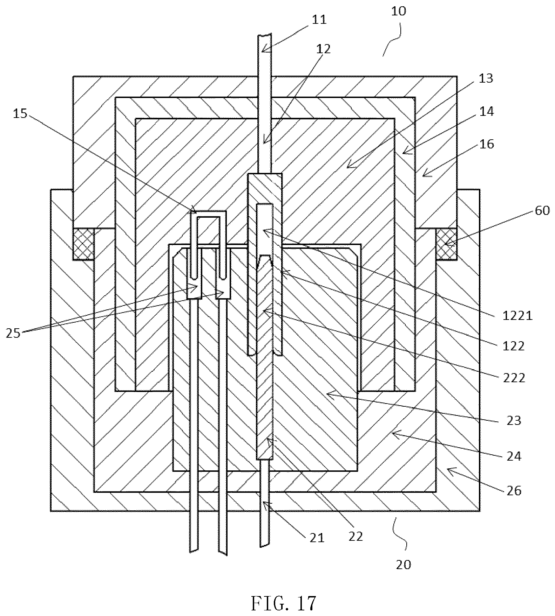

In an embodiment, as illustrated in FIGS. 16 and 17, the plug-in portion 122 is sheet-shaped, at least part of which protrudes from the male-end housing 13, or the male-end housing 13 is provided with a first accommodating cavity and at least part of the plug-in portion 122 protrudes from a bottom surface of the first accommodating cavity without exceeding the male-end housing 13. At least part of the plug-in portion 122 protrudes beyond the male-end housing 13, so as to be directly in plugged connection with the plug-in terminal 12 in the female-end housing 23, or may be disposed inside the first accommodating cavity of the male-end housing 13, with the plug-in terminal 12 in the female-end housing 23 penetrating into the first accommodating cavity, so as to be in plugged connection with the plug-in portion 122.

Further, as illustrated in FIGS. 16 and 17, the plug-in portion 122 is provided with a first clamping groove 1221, at least part of which protrudes from an outer wall of the male-end housing 13, or the male-end housing 13 is provided with a first open boss, in which at least part of the plug-in portion 122 is disposed.

In the above embodiment, at least part of the plug-in portion 122 protrudes from the male-end housing 13, so as to be in plugged connection with the plug-in terminal 12 disposed in the first open boss. Alternatively, the male-end housing 13 is provided with a first accommodating cavity, and at least part of the plug-in portion 122 protrudes from a bottom surface of the first accommodating cavity without exceeding the male-end housing 13, so as to be in plugged connection with the plug-in terminal 12 protruding from the outer wall of the female-end housing 23.

In an embodiment, as illustrated in FIGS. 16 and 17, the male-end shielding shell 14 wraps at least part of the male-end housing 13, the male-end shielding shell 14 is provided with an opening, and the plug-in portion 122 extends from or is located inside the opening. The plug-in portion 122 in the male-end housing 13 may be in plugged connection with the plug-in terminal 12, while the male-end shielding shell 14 may be in plugged connection with the female-end shielding shell 24, so as to realize a shielded electrical connection.

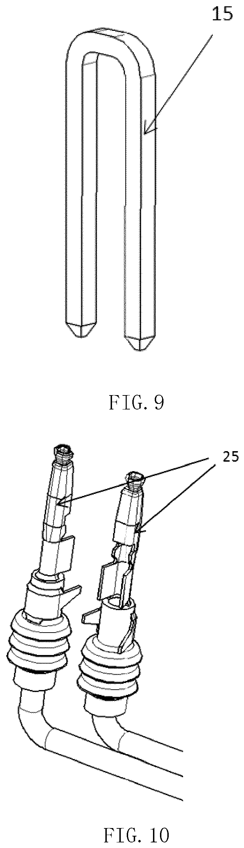

In an embodiment, as illustrated in FIG. 9, the male-end connecting mechanism 10 includes an interlocking connector 15, at least part of which is integrally injection-molded in the male-end housing 13. High-voltage interlocking is a safety design method to monitor the integrity of a high-voltage loop with a low-voltage signal. Different projects have different designs for the implementation of high-voltage interlocking. The high-voltage interlocking is to monitor the accidental disconnection of the high-voltage loop to avoid the damage to the automobile due to the sudden loss of power. In the high-voltage interlocking of this embodiment, the interlocking connector 15 is located at one end and is a U-shaped or V-shaped low-voltage loop with two plugging pins electrically connected to each other. The interlocking connector 15 does not need to be mounted, but may be directly formed in the male-end housing 13 by means of integral injection-molding, and in matched connection with a high-voltage interlocking structure 25 in the female-end connecting mechanism 20 to form a low-voltage monitoring loop, as illustrated in FIGS. 16 and 17. When the charging harness connector in this embodiment is accidentally disconnected, the interlocking connector 15 and the high-voltage interlocking structure 25 are disconnected at the same time, and the low-voltage monitoring loop gives an alarm to a central control system, so as to prevent the automobile from being damaged due to the sudden loss of power.

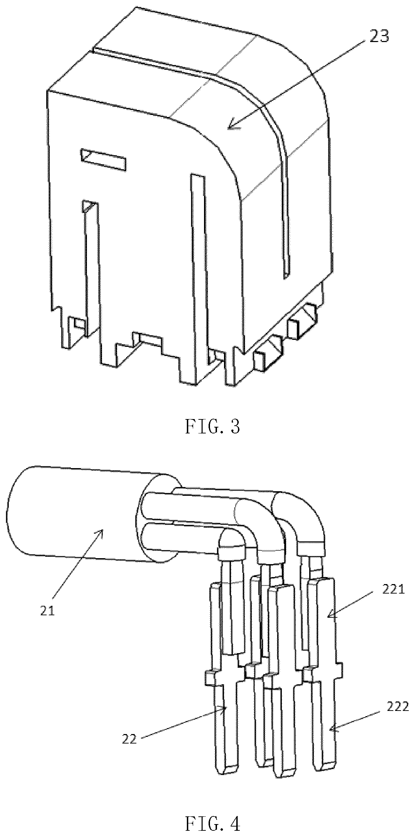

In an embodiment, as illustrated in FIGS. 4 and 14, the mating terminal 22 includes a second fixing portion 221 and a mating portion 222 which are sequentially disposed, the second fixing portion 221 is electrically connected to the electrically-conductive part of the second cable 21, and the mating portion 222 is sheet-shaped or provided with a second clamping groove 2221; the plug-in terminal 12 includes a first fixing portion 121 and a plug-in portion 122 which are sequentially disposed, the mating portion 222 is electrically connected to the plug-in portion 122, and the plug-in portion 122 is sheet-shaped or provided with a first clamping groove 1221. The sheet-shaped mating portion 222 is in plugged connection with the first clamping groove 1221 of the plug-in portion 122, or the sheet-shaped plug-in portion 122 is in plugged connection with the second clamping groove 2221 of the mating portion 222, so as to realize an electrical connection between the mating terminal 22 and the plug-in terminal 12 and an electrical connection between the first cable 11 and the second cable 21, thereby enable safely and stably conducting the current.

In an embodiment, the second fixing portion 221 is connected to the electrically-conductive part at a front end of the second cable 21 by one or more of resistance welding, friction welding, ultrasonic welding, arc welding, laser welding, electron beam welding, pressure diffusion welding, magnetic induction welding, screwing, clamping, splicing and crimping. This solution is the same as the connection mode between the first fixing portion 121 and the first cable 11, and will not be described in detail.

In an embodiment, as illustrated in FIGS. 14 and 15, an outer periphery of the first clamping groove 1221 or an outer periphery of the second clamping groove 2221 is sleeved by a clip 50, which is made of a memory alloy. The memory alloy is an intelligent metal with a memory, and its microstructure has two relatively stable states. The memory alloy may be changed into any desired shape at a high temperature and may be stretched at a low temperature; when being reheated, the memory alloy will remember its original shape and change back; the memory alloy has different crystal structures above and below its transformation temperature, and when the temperature changes around the transformation temperature, the memory alloy contracts or expands, thereby causing a change of its morphology. In some embodiments, the memory alloy is a nickel-titanium alloy.

In an embodiment, the transformation temperature of the memory alloy is set in a range of 40°C to 70°C. When the temperature of the clip 50 is lower than the transformation temperature, the clip 50 is in an expanded state, and when the temperature of the clip 50 is higher than the transformation temperature, the clip 50 is in a clamped state.

In general, the transformation temperature is selected as between 40°C and 70°C, because if the transformation temperature is lower than 40°C, the ambient temperature of the plug-in terminal 12, the mating terminal 22 and the clip 50 will reach nearly 40°C without current conduction. At this time, the clip 50 is in a clamped state, and a banded groove of the first clamp groove 1221 of the plug-in terminal 12 or a banded groove of the second clamp groove 2221 of the mating terminal 22 becomes smaller (in some embodiments, the first clamp groove 1221 and/or the second clamp groove 2221 may be banded grooves), so that the plug-in terminal 12 cannot be plugged into the mating terminal 22. As a result, the plug-in terminal 12 and the mating terminal 22 cannot be plugged with or unplugged from each other, and works cannot be carried out.

At the room temperature, current is conducted after the plug-in terminal 12 is plugged with the mating terminal 22. Since the clip 50 in an expanded state at the beginning of plugging, the contact area between the plug-in terminal 12 and the mating terminal 22 is small and the current is large, which leads to the temperature rises of the plug-in terminal 12, the mating terminal 22 and the clip after plugging. However, if the transformation temperature is higher than 70°C, the temperature rise of the clip 50 takes a long time. When the plugged structure of the plug-in terminal 12 and the mating terminal 22 is under the large current for a long time, electrical aging will be easily caused, and in severe cases, the plugged structure of the plug-in terminal 12 and the mating terminal 22 will be overloaded and damaged, resulting in unnecessary losses.

Therefore, the transformation temperature of the memory alloy is generally set between 40°C and 70°C.

The clip 50 has a memory function. The banded groove of the first clamp groove 1221 of the plug-in terminal 12 or the banded groove of the second clamp groove 2221 of the mating terminal 22 is generally in an expanded state below the transformation temperature. At this time, the plug-in terminal 12 can be plugged with the mating terminal 22 without an insertion force, so that an operator can easily plug the electrical appliance. During operation, current is conducted to the plug-in terminal 12 and the mating terminal 22, and the temperature thereof gradually increase due to the effect of the resistance. When the temperature rises above the transformation temperature, the clip 50 will contract radially, so that the contact area and the contact force between the banded groove of the first clamping groove 1221 of the plug-in terminal 12 and between the banded groove of the second clamping groove 2221 of the mating terminal 22 can be increased by the temperature rise, and then the contact reliability can be improved. Since the insertion force is not required, the work is easier and the working efficiency is improved.

In an embodiment, as illustrated in FIG. 15, an outer periphery of the first clamping groove 1221 or an outer periphery of the second clamping groove 2221 is sleeved by a clamp 50, which includes a sidewall 51 and an elastic element 52 fixed thereon, and the elastic element 52 is in contacted connection with the first clamping groove 1221 or the second clamping groove 2221. The clamp 50 applies a pressure to the plug-in terminal 12 through the elastic element 52 disposed on the sidewall 51, so that the first clamping groove of the plug-in terminal 12 can clamp the mating terminal 22 more tightly, thereby ensuring the contact area between the plug-in terminal 12 and the mating terminal 22, reducing the contact resistance and improving the electrical conductivity.

Further, the force applied by the elastic element 52 to the first clamping groove 1221 or the second clamping groove 2221 ranges from 3 N to 200 N.

In order to verify the influence of the pressure applied to the first clamping groove 1221 or the second clamping groove 2221 by the elastic element 52 on the contact resistance and the plugging and unplugging condition after the plug-in terminal 12 is plugged with the mating terminal 22, taking the situation that the plug-in terminal 12 is sleeved by the clip 50 as an example, the inventor selects the plug-in terminal 12 and the mating terminal 22 with the same size, and different elastic elements 52 to apply pressures to the plug-in terminal 12. Then, the inventor selects the mating terminals 22 with the same eccentricity to be plugged with the plug-in terminal 12 sleeved by the clip 50, and tests the contact resistance between the terminals after plugging and a plugging success rate of the plug-in terminal 12 in multiple plugging and unplugging experiments. The test results are shown in Table 5.

The test method of the contact resistance is to adopt a micro-ohmmeter, in which one end of a measuring part of the micro-ohmmeter is placed on the plug-in terminal 12 and the other end thereof is placed on the mating terminal 22, with the same position for each measurement, and then read the value of the contact resistance on the micro-ohmmeter. **In** this embodiment, the contact resistance greater than 1 mΩ is unqualified.

The test method of the plugging success rate is to apply a pressure by each of the elastic elements 52 to the plug-in terminal 12 for plugging with 100 mating terminals 22 with the same eccentricity, record the number of successful one-time plugging, take a ratio of the above number to a total number of plugging and multiply the ratio by 100%. **In** this embodiment, the plugging success rate less than 95% is unqualified.

**Table 5: Influence of different pressures on the contact resistance and the plugging success rate**

| Pressure applied by the elastic element 52 to the plug-in terminal 12 (N) | | | | | | | | | | | | | | | |
|---|---|---|---|---|---|---|---|---|---|---|---|---|---|---|---|
| 1 | 3 | 5 | 10 | 20 | 40 | 60 | 80 | 100 | 120 | 140 | 160 | 180 | 200 | 240 | 260 |

| Contact resistance between the plug-in terminal 12 and the mating terminal 22 (mΩ) | | | | | | | | | | | | | | | |
|---|---|---|---|---|---|---|---|---|---|---|---|---|---|---|---|
| 1.23 | 0.99 | 0.98 | 0.92 | 0.88 | 0.84 | 0.82 | 0.77 | 0.72 | 0.68 | 0.64 | 0.58 | 0.53 | 0.49 | 0.47 | 0.44 |

| Plugging success rate of the plug-in terminal 12 and the mating terminal 22 (%) | | | | | | | | | | | | | | | |
|---|---|---|---|---|---|---|---|---|---|---|---|---|---|---|---|
| 100 | 100 | 100 | 100 | 100 | 100 | 100 | 99 | 97 | 97 | 96 | 96 | 95 | 95 | 88 | 86 |

As can be seen from Table 5, when the pressure applied to the plug-in terminal 12 by the elastic element 52 is less than 3 N, although the plugging success rate is qualified, the contact resistance between the plug-in terminal 12 and the mating terminal 22 is greater than 1 mΩ, which is too large. When the pressure applied to the plug-in terminal 12 by the elastic element 52 is greater than 200 N, the plugging success rate is less than 95%, which cannot meet the application requirement. Therefore, the inventor sets the pressure applied to the plug-in terminal 12 by the elastic element 52 as 3 N to 200 N.

In an embodiment, the elastic element 52 is an elastic rubber body, a spring or a metal elastic piece. When the elastic element 52 is an elastic rubber body, the pressure applied to the plug-in terminal 12 or the mating terminal 22 is ensured by an elastic force generated by compressing the elastic rubber body. When the elastic element 52 is a compression spring, the pressure applied to the plug-in terminal 12 or the mating terminal 22 is ensured by an elastic force generated by compressing the compression spring. When the elastic element 52 is a metal elastic piece, it is integrally formed with the clip 50, and may be in the form of a single-ended elastic sheet in which one end is fixed and the other end is free, or in the form of a double-ended elastic sheet in which both ends are fixed and the middle is convex, so that the pressure applied to the plug-in terminal 12 or the mating terminal 22 can be ensured by the elastic force of the metal elastic piece itself.

In an embodiment, as illustrated in FIGS. 16 and 17, the mating portion 222 is sheet-shaped, and at least part thereof protrudes from the female-end housing 23, or the female-end housing 23 is provided with a second accommodating cavity, and at least part of the mating portion 222 protrudes from a bottom surface of the second accommodating cavity without exceeding the female-end housing 23. The mating portion 222 protruding from the female-end housing 23 may be in plugged connection with the plug-in portion 122 recessed in the male-end housing 13 to form a plugged structure and realize an electrical connection. The mating portion 222 may also be recessed in the female-end housing 23, and in plugged connection with the plug-in portion 122 protruding from the male-end housing 13 to form a plugged structure and realize an electrical connection.

In an embodiment, as illustrated in FIGS. 16 and 17, the mating portion 222 is provided with a second clamping groove 2221, at least part of which protrudes from an outer wall of the female-end housing 23, or the female-end housing 23 is provided with a second open boss in which at least part of the mating portion 222 is disposed. The mating portion 222 protruding from the female-end housing 23 can be mated with the plug-in portion 122 recessed in the male-end housing 13 to form a plugged structure and realize electrical connection. The mating portion 222 can also be recessed in the second open boss of the female-end housing 23, and be mated with the plug-in portion 122 protruding from the male-end housing 13 to form a plugged structure and realize electrical connection.

In an embodiment, as illustrated in FIGS. 16 and 17, the plug-in portion 122 or the mating portion 222 is formed by stacking a plurality of layers of terminal laminations, and the plug-in portion 122 is provided with a first clamping groove 1221, which is matched and plugged with the sheet-shaped mating portion 222; or the mating portion 222 is provided with a second clamping groove 2221, which is matched and plugged with the sheet-shaped plug-in portion 122.

The mating terminal 22 may be plugged and matched with the plug-in terminal 12, and the plug-in portion 122 or mating portion 222 is composed of a plurality of layers of terminal laminations in stacked distribution. The plug-in portion 122 is provided with a first clamping groove 1221, which is in plugged connection with the mating portion 222, or the mating portion 222 is provided with a second clamping groove 2221, which is matched and plugged with the plug-in portion 122.

The front end of the sheet-shaped terminal can be plugged into the first clamping groove 1221 or the second clamping groove 2221. The problem of deformation and elasticity weakening caused by the excessive thickness of the metal plate can be alleviated through the structure of the first clamping groove 1221 or the second clamping groove 2221, and a large contact area can be realized therebetween, thereby ensuring the connection reliability and the electrical conduction effect. The mating terminal 22 and the plug-in terminal 12 can ensure the stability of the clamping structure, reduce the deformation and increase the strength of the plugged structure.

In an embodiment, the terminal laminations are formed by stamping or cutting or bending a plate. The terminal laminations are sheet-shaped and in a stacked distribution, so that the plug-in portion 122 and the mating portion 222 can have a high mechanical connection performance, while ensuring the electrically-conductive connection performance between the plug-in portion 122 and the mating portion 222. The mode of stamping or cutting a plate is simple and the process is mature, which can quickly process the terminal laminations in large quantities, thereby save the processing cost and improving the production efficiency.

In an embodiment, as illustrated in FIG. 14, the terminal lamination includes a terminal fixing portion 40, to which the first clamping groove 1221 or the second clamping groove 2221 is rigidly attached. Through the terminal fixing portion 40, a plurality of layers of terminal laminations are stacked and connected together and fixedly connected to the first fixing portion 121 and the second fixing portion 221.

In an embodiment, adjacent two of the terminal fixing portions 40 are connected together by crimping, welding, screwing, riveting or splicing to ensure the stability of the electrical connection.

The crimping is a production process in which the adjacent terminal fixing portions 40 are assembled and then stamped into a whole using a crimping machine. The crimping has the advantage of mass production, and by adopting an automatic crimping machine, products with a stable quality can be rapidly manufactured in large quantities.

The welding is to fuse the adjacent terminal fixing portions 40 into a whole through metal welding points by adopting friction welding, resistance welding, ultrasonic welding, arc welding, pressure welding, laser welding, explosion welding, etc., so the connection is firm and the contact resistance is small.

The screwing refers to a threaded connection, in which the adjacent terminal fixing portions 40 have threaded structures respectively, which can be screwed together, or separate stud and nut are used to be connected together. The threaded connection has the advantage of detachability and repeatable assembly and disassembly, and it is suitable for scenarios requiring disassembly frequently.

The riveting is to rivet the adjacent terminal fixing portions 40 together by using a rivet. The riveting has the advantages of firm connection, simple processing and easy operation.

The splicing means that the adjacent terminal fixing portions 40 are provided with a corresponding groove and protrusion, respectively, and an assembly is made by connecting the groove and the protrusion together by means of tenoning or splicing. The splicing has the advantages of stable connection and detachability.

The belt-shaped clamping grooves of adj acent two of the terminal la minations are contacted with each other, so that the terminal laminations can slide relative to each other and maintain their own clamping forces, and the connection stability can be improved by taking advantage of the uneven surface of the plug-in terminal.

In an embodiment, adjacent two of the terminal laminations of the first clamping groove 1221 or the second clamping groove 2221 are in contacted connection, which ensures the current circulation therein, increases a cross-sectional area of circulation, reduces the temperature rise when the mating terminal 22 and the plug-in terminal 12 are electrified, and prolongs the service lives of the mating terminal 22 and the plug-in terminal 12.

**In** an embodiment, a gap between adjacent two of the terminal laminations of the first clamping groove 1221 or the second clamping groove 2221 is less than 0.2 mm. The gap is provided between the terminal laminations for the purpose of circulating air therebetween, so as to reduce the temperature rise between the plug-in terminal 12 and the mating terminal 22, protect the electrically-conductive anticorrosion layer of the plug-in terminal 12 or the mating terminal 22, prolong the service life of the plug-in terminal 12 or the mating terminal 22, and ensure the plugging force between the plug-in terminal 12 and the mating terminal 22. When the gap is greater than 0.2 mm, the heat dissipation function is not improved, and a large width is occupied by the plug-in terminal 12 or the mating terminal 22 with the same contact area, resulting in a waste of the use space.

**In** an embodiment, as illustrated in FIG. 10, the female-end connecting mechanism 20 is provided with a high-voltage interlocking structure 25, which is electrically connected to the interlocking connector 15 to form a loop. When the male-end connecting mechanism 10 is plugged with the female-end connecting mechanism 20, the high-voltage interlocking structure 25 and the interlocking connector 15 can form a loop. High-voltage interlocking is a safety design method to monitor the integrity of a high-voltage loop with a low-voltage signal. The high-voltage interlocking is to monitor the accidental disconnection of the high-voltage loop to avoid the damage to the automobile due to the sudden loss of power. In the high-voltage interlocking of this embodiment, the interlocking connector 15 is located at one end and is a U-shaped or V-shaped low-voltage loop with two plugging pins electrically connected to each other; at the other end, two plug-in terminals are disposed in the female-end connecting mechanism 20 and connected to the low-voltage loop. The plug-in terminals of the high-voltage interlocking structure 25 are in matched connection with the plugging pins of the interlocking connector 15 to form a low-voltage monitoring loop, as illustrated in FIGS. 16 and 17, and when the charging harness connector in this embodiment is accidentally disconnected, the interlocking connector 15 and the high-voltage interlocking structure 25 are disconnected at the same time, and the low-voltage monitoring loop gives an alarm to ae central control system, so as to prevent the automobile from being damaged due to the sudden loss of power.

The embedded high-voltage interlocking structure replaces the previous assembled high-voltage interlocking structure, and is fixed in the connector by integral injection-molding without assembling, so that the cost is reduced and the high-voltage interlocking effect is completely satisfied.

In an embodiment, as illustrated in FIGS. 16 and 17, the male-end connecting mechanism 10 and/or the female-end connecting mechanism 20 has a seal structure 60, which can seal the plug-in terminal 12, part of the first cable 11, the mating terminal 22 and part of the second cable 21 into the high-voltage connecting mechanism, so as to prevent external dust and moisture from damaging and corroding the internal electrically-conductive mechanism, and greatly prolong the service life of the high-voltage connecting mechanism.

Further, the seal structure 60 is secondary injection-molded on the male-end connecting mechanism 10 and/or the female-end connecting mechanism 20. The seal structure 60 enables the male-end connecting mechanism 10 and/or the female-end connecting mechanism 20 to be more closely connected.

The seal structure 60 of the connector is no longer a separate seal ring, but adopts a secondary injection-molded seal structure 60 to replace the traditional seal ring, so as to be directly molded on the connector, thereby achieving a better injection bonding and a lower cost.

Further, the seal structure 60 is made of rubber, soft glue or silica gel. These materials can be heated and melted by an injection molding machine and injected into a corresponding mold for molding, so that the processing is simple and the bonding is firm, and the service life of the seal structure 60 can be greatly prolonged. In addition, these materials have good elasticity and be extruded and deformed during the assembly of the connector, so as to fill the gap and achieve a good sealing performance. Moreover, these materials are water-resistant and oil-resistant, thereby ensuring a long service life and a safe sealing performance of the seal structure.

Further, a maximum gap between the seal structure 60 and the male-end connecting mechanism 10 and/or the female-end connecting mechanism 20 is less than 520 nm.

In order to verify the influence of the gap between each seal structure and the adjacent device on the sealing grade, the inventor adopts a dry air method to test the sealing device. By vacuumizing or air pressurization, the internal and external pressures of the tested sample are controlled to be different, and the difference between the internal and external pressures will decrease if there is a leakage, so that the airtightness can be detected by detecting the change of the air pressure. The detection medium is dry air, which is non-toxic and harmless without damaging the tested sample, and the detection environment is clean and tidy. For example, in the detection of the seal structure disposed on the male-end connecting mechanism, the inventor completely seals other joints after the connection between the male-end connecting mechanism 10 and the female-end connecting mechanism 20, selects the seal structures with different sealing degrees and partially extracts the dry air therein, so that the air pressure in the seal structure is lower than the external air pressure, and continuously detects the air pressure in the seal structure. It is unqualified when the air pressure increases, and the test results are shown in Table 6.

**Table 6: Influence of the maximum gap between the seal structure and the male-end connecting mechanism and/or the female-end connecting mechanism on the change of the air pressure**

| | | | | | | | | | |
|---|---|---|---|---|---|---|---|---|---|
| Maximum gap (nm) | 530 | 520 | 500 | 450 | 400 | 350 | 300 | 280 | 260 |
| Whether the air pressure changes | Yes | No | No | No | No | No | No | No | No |

As can be seen from Table 6, when the maximum gap between the seal structure and the male-end connecting mechanism 10 and/or the female-end connecting mechanism 20 exceeds 520 nm, the air pressure changes, which means that air enters the seal structure and the test result is unqualified. Therefore, the inventor selects the maximum gap between the seal structure and the male-end connecting mechanism 10 and/or the female-end connecting mechanism 20 to be not less than 520 nm.

In an embodiment, the male-end connecting mechanism 10 and/or the female-end connecting mechanism 20 has at least one temperature measuring structure configured to measure a temperature of the plug-in terminal 12 and/or the mating terminal 22. The temperature measuring structure may be at a distance from the plug-in terminal 12 or the mating terminal 22. The heat radiation is transmitted to the temperature measuring structure from the plug-in terminal 12 or the mating terminal 22, and then the temperature of the plug-in terminal 12 or the mating terminal 22 is measured by the temperature measuring mechanism; or the temperature measuring structure includes a conductive element attached to the plug-in terminal 12 or the mating terminal 22, the temperature of the plug-in terminal 12 or the mating terminal 22 is measured from the temperature transmitted by the conductive element, and the measured temperature is transmitted to the control system, so as to adjust the current passing through the plug-in terminal 12 or the mating terminal 22, thereby adjusting the temperature of the male-end connecting mechanism 10 or the female-end connecting mechanism 20.

In an embodiment, the temperature measuring structure is attached to the plug-in terminal 12 and/or the mating terminal 22 to measure the temperature thereof. The temperature measuring structure is a temperature sensor, which is directly attached to the plug-in terminal 12 and/or the mating terminal 22, thereby directly obtaining the actual temperature thereof without calculation. The structure is simple and the temperature measurement is more accurate.

The temperature sensor is an NTC temperature sensor or a PTC temperature sensor. These two temperature sensors are advantageous in that they are small in size and can measure gaps that cannot be measured by other thermometers; the usage is convenient, and the resistance can be arbitrarily selected between 0.1 kΩ and 100 kΩ; and the temperature sensors are easy to be processed into complex shapes, can be produced in large quantities, have good stability and strong overload capacity, and are suitable for products such as adapters requiring small sizes and stable performances.

By adopting the temperature measuring structure, it is possible to separately monitor the terminal temperature inside the connector, and avoid the situation that the temperature of the connector cannot be monitored due to the damage of the temperature sensors in other positions.

In an embodiment, the male-end connecting mechanism 10 and the female-end connecting mechanism 20 are connected by one or more of adhesive connection, magnetic attraction connection, bayonet connection, plugging connection, latching connection, binding connection, threaded connection, riveting connection and welding connection. The detailed implementations are as follows.

In a first feasible technical solution, an adhesive structure may be adopted. For example, the surfaces to be spliced of the male-end connecting mechanism 10 and the female-end connecting mechanism 20 are respectively provided with adhesive layers, which are fixedly connected by means of adhesion.

In a second feasible technical solution, a magnetic attraction structure may be adopted. For example, the surfaces to be spliced of the male-end connecting mechanism 10 and the female-end connecting mechanism 20 are respectively provided with magnetic attraction parts, so that the connection is convenient and quick.

In a third feasible technical solution, a plugged structure may be adopted. The outer surface of the male-end shielding shell 14 is provided with a latch, and the outer surface of the female-end connecting mechanism 20 is provided with a rabbet, into which the latch is inserted to achieve a fixed connection, so that the male-end shielding shell 14 and the female-end shielding shell 24 are fixedly connected, which achieves a fixed connection between the male-end connecting mechanism 10 and the female-end connecting mechanism 20.

In a fourth feasible technical solution, a clamping structure may be adopted. For example, the male-end shielding shell 14 of the male-end connecting mechanism 10 is provided with a buckle, and the female-end shielding shell 24 of the female-end connecting mechanism 20 is provided with a slot. The buckle is engaged with the slot to achieve a fixed connection, so that the male-end connecting mechanism 10 and the female-end connecting mechanism 20 are fixedly connected.

In a fifth feasible technical solution, a bolted connection structure may be adopted, which includes a bolt and a nut, in which the bolt is fixed on the surface to be spliced of the male-end connecting mechanism 10, and the nut is disposed on the surface to be spliced of the female-end connecting mechanism 20 and is rotatable. After the bolt and the nut are screwed and tightened, the surfaces to be spliced of the male-end connecting mechanism 10 and the female-end connecting mechanism 20 are fixedly connected. The bolted connection structure adopts the bolt and the nut with the minimum size of M3, and a minimum torque is 0.2 N·m when the bolted connection structure is tightened.

In a sixth feasible technical solution, a riveting structure may be adopted which includes a rivet and fixing holes, in which the fixing holes are disposed on the surfaces to be spliced of the male-end connecting mechanism 10 and the female-end connecting mechanism 20, and the rivet is allowed to pass through the fixing holes and then deformed to tighten the fixing holes, so that the surfaces to be spliced of the male-end connecting mechanism 10 and the female-end connecting mechanism 20 are fixedly connected.

In a seventh feasible technical solution, a welding structure may be adopted. For example, welding pieces are disposed on the surfaces to be spliced of the male-end connecting mechanism 10 and the female-end connecting mechanism 20, and a welding machine is adopted to melt and connect the welding pieces together, so that the surfaces to be spliced of the male-end connecting mechanism 10 and the female-end connecting mechanism 20 are fixedly connected. The welding machine includes a hot melt welding machine and an ultrasonic welding machine.

In an eighth feasible technical solution, a binding structure may be adopted which includes a binding piece, in which grooves are formed on the surfaces of the male-end connecting mechanism 10 and the female-end connecting mechanism 20, and the binding piece is adopted to bind the surfaces to be spliced of the male-end connecting mechanism 10 and the female-end connecting mechanism 20 together at the positions of the grooves, so that the surfaces to be spliced of the male-end connecting mechanism 10 and the female-end connecting mechanism 20 are fixedly connected. The binding piece includes a strapping tape, a pipe collar, a hook lock, etc.

In a ninth feasible technical solution, a latching structure may be adopted which includes a latching piece disposed on the surfaces to be spliced of the male-end connecting mechanism 10 and the female-end connecting mechanism 20 or an adjacent surface, so that the surfaces to be spliced of the male-end connecting mechanism 10 and the female-end connecting mechanism 20 are fixedly connected through the latching piece.

In the above technical solutions of connecting the male-end connecting mechanism 10 and the female-end connecting mechanism 20, the positions of the male-end connecting mechanism 10 and the female-end connecting mechanism 20 may be interchanged.

Further, as illustrated in FIGS. 16 and 17, at least part of an outer periphery of the male-end shielding shell 14 or at least part of an outer periphery of the female-end shielding shell 24 is injection-molded with a male-end insulation housing 16 or a female-end insulation housing 26. By means of integral injection-molding, the male-end insulation housing 16 or the female-end insulation housing 26 can be directly molded on at least part of the outer periphery of the male-end shielding shell 14 or at least part of the outer periphery of the female-end shielding shell 24, which ensures that the electrically-conductive part of the male-end shielding shell 14 or the female-end shielding shell 24 will not be connected to other external conductors to cause a short circuit.

In an embodiment, a plugging force between the plug-in terminal 12 and the mating terminal 22 is between 3 N and 150 N.

Further, the plugging force between the plug-in terminal 12 and the mating terminal 22 is between 10 N and 130 N.

In order to verify the influence of the plugging force between the plug-in terminal 12 and the mating terminal 22 on the contact resistance and the plugging situation therebetween, the inventor selects the plug-in terminal 12 and the mating terminal 22 with the same shape and size, and designs different plugging forces between the plug-in terminal 12 and the mating terminal 22, so as to observe the contact resistance therebetween and the situation after multiple plugging.

The test method of the contact resistance is to adopt a micro-ohmmeter to measure the resistance at the contact position between the plug-in terminal 12 and the mating terminal 22, and read the value on the micro-ohmmeter as the contact resistance between the plug-in terminal 12 and the mating terminal 22. In this embodiment, the contact resistance less than 50 µΩ is an ideal value.

The test method of the plugging situation between the plug-in terminal 12 and the mating terminal 22 is to plug the plug-in terminal 12 and the mating terminal 22 for 50 times, and thereafter observe the numbers of times of dropping and of the situation that plugging and unplugging are impossible. The number of times of dropping after plugging and unplugging is required to be less than 3, and the number of times of the situation that plugging and unplugging are impossible is required to be less than 5.

**Table 7: Influence of different plugging forces between the between the plug-in terminal 12 and the mating terminal 22 on the contact resistance and the plugging situation**

| Plugging force between the plug-in terminal 12 and the mating terminal 22 (N) | | | | | | | | | | | | | |
|---|---|---|---|---|---|---|---|---|---|---|---|---|---|
| 1 | 3 | 5 | 10 | 25 | 35 | 45 | 55 | 65 | 75 | 95 | 130 | 150 | 155 |

| Contact resistance (µΩ) | | | | | | | | | | | | | |
|---|---|---|---|---|---|---|---|---|---|---|---|---|---|
| 62 | 49 | 48 | 43 | 37 | 35 | 31 | 27 | 22 | 17 | 15 | 11 | 8 | 6 |

| Number of times of dropping after plugging and unplugging | | | | | | | | | | | | | |
|---|---|---|---|---|---|---|---|---|---|---|---|---|---|
| 5 | 2 | 1 | 0 | 0 | 0 | 0 | 0 | 0 | 0 | 0 | 0 | 0 | 0 |

| Number of times of the situation that plugging and unplugging are impossible | | | | | | | | | | | | | |
|---|---|---|---|---|---|---|---|---|---|---|---|---|---|
| 0 | 0 | 0 | 0 | 0 | 0 | 0 | 0 | 0 | 0 | 0 | 1 | 3 | 6 |

As can be seen from Table 7, when the plugging force between the plug-in terminal 12 and the mating terminal 22 is less than 3 N, the contact resistance between the plug-in terminal 12 and the mating terminal 22 is higher than the ideal value because the bonding force therebetween is too small, and at the same time, the number of times of dropping after plugging and unplugging exceeds 3, which is unqualified. When the plugging force between the plug-in terminal 12 and the mating terminal 22 is greater than 150 N, the number of times of the situation that plugging and unplugging are impossible between the plug-in terminal 12 and the mating terminal 22 is greater than 5, which is also unqualified. Therefore, the inventor sets the plugging force between the plug-in terminal 12 and the mating terminal 22 to be between 3 N and 150 N.

As can be seen from Table 7, when the plugging force between the plug-in terminal 12 and the mating terminal 22 is between 10 N and 130 N, there is neither dropping after plugging and unplugging nor the situation that plugging and unplugging are impossible, and the contact resistance is also within the range of the ideal value. Therefore, the inventor sets that the plugging force between the plug-in terminal 12 and the mating terminal 22 is exemplarily between 10 N and 130 N.

In an embodiment, the contact resistance between the plug-in terminal 12 and the mating terminal 22 is less than 9 mΩ.

Exemplarily, the contact resistance between the plug-in terminal 12 and the mating terminal 22 is less than 1 mΩ.

Generally, large current needs to be conducted between the plug-in terminal 12 and the mating terminal 22. If the contact resistance between the plug-in terminal 12 and the mating terminal 22 is greater than 9 mΩ, a large temperature rise will occur at the contact position, and the temperature will be increasingly higher with the elapse of time. When the temperature between the plug-in terminal 12 and the mating terminal 22 is too high, the mechanical deformations are asynchronous due to different thermal expansion rates of the plug-in terminal 12 and the mating terminal 22, resulting in internal stresses of the plug-in terminal 12 and the mating terminal 22. In severe cases, the plug-in terminal 12 and the mating terminal 22 will be deformed and the electrical conduction cannot be achieved. In addition, the excessive temperature of the flat terminal 113 and the plug-in terminal 23 may be transferred to the insulation layers of the first cable 11 and the second cable 21, resulting in the melting of the corresponding insulation layers, and the insulative protection cannot be achieved. In serious cases, a short circuit of the lines may be caused, resulting in damage to the connection structure, and even burning and other safety accidents. Therefore, the inventor sets the contact resistance between the plug-in terminal 12 and the mating terminal 22 to be less than 9 mΩ.

In order to verify the influence of the contact resistance between the plug-in terminal 12 and the mating terminal 22 on the temperature rise and the electrical conductivity of the connector, the inventor selects the same plug-in terminal 12 and the mating terminals 22 with different contact resistances, and tests the electrical conductivity and the temperature rise of the plugged structure.

The test on the electrical conductivity is to check the electrical conductivity at the corresponding plugged position after the plug-in terminal 12 is plugged with the mating terminal 22 and the plugged structure is electrified. In this embodiment, the electrical conductivity greater than 99% is an ideal value.

The test on the temperature rise is to supply the same power to the plugged structure, detect the temperatures of the plug-in terminal 12 and the mating terminal 22 at the same position before the power supply and after the temperature is stable in a closed environment, and take a difference therebetween to obtain an absolute value. In this embodiment, the temperature rise greater than 50 K is unqualified.

**Table 8: Influence of different contact resistances between the plug-in terminal 12 and the mating terminal 22 on the electrical conductivity and the temperature rise**

| Different contact resistances between the plug-in terminal 12 and the mating terminal 22 (mΩ) | | | | | | | | |
|---|---|---|---|---|---|---|---|---|
| 10 | 9 | 8 | 6 | 4 | 3 | 2 | 1 | 0.5 |

| Temperature rise of the plugged structure (k) | | | | | | | | |
|---|---|---|---|---|---|---|---|---|
| 56 | 48 | 41 | 35 | 29 | 24 | 23 | 16 | 7 |

| Electrical Conductivity of the plugged structure (%) | | | | | | | | |
|---|---|---|---|---|---|---|---|---|
| 98.8 | 99.5 | 99.6 | 99.8 | 99.8 | 99.7 | 99.8 | 99.9 | 99.9 |

As can be seen from Table 8, when the contact resistance between the plug-in terminal 12 and the mating terminal 22 is greater than 9 mΩ, the temperature rise of the plugged structure exceeds 50 K, and at the same time, the electrical conductivity of the plugged structure is less than 99%, which does not meet the standard requirement. Therefore, the inventor sets the contact resistance between the plug-in terminal 12 and the mating terminal 22 to be less than 9 mΩ.

Further, when the contact resistance between the plug-in terminal 12 and the mating terminal 22 is less than 1 mΩ, the temperature rise of the plugged structure is lower than 20 K, the electrical conductivity of the plugged structure between the plug-in terminal 12 and the mating terminal 22 is 99.9%, and the electrical conduction effect is better, so the inventor exemplarily sets the contact resistance between the plug-in terminal 12 and the mating terminal 22 to be less than 1 mΩ.

In an embodiment, the number of times of plugging and unplugging between the male-end connecting mechanism 10 and the female-end connecting mechanism 20 is greater than or equal to 10. When the connecting mechanism is to be assembled with an electrical appliance, it is necessary to assemble the male-end connecting mechanism 10 and the female-end connecting mechanism 20 together, and during the subsequent maintenance and disassembly, it may be required to separate the male-end connecting mechanism 10 and the female-end connecting mechanism 20 before plugging and unplugging. Thus, the number of times of plugging and unplugging between the male-end connecting mechanism 10 and the female-end connecting mechanism 20 should not be less than 10. Otherwise, the male-end connecting mechanism 10 or the female-end connecting mechanism 20 may be damaged during certain disassembly or maintenance and the current cannot be conducted, so it is necessary to replace the whole connecting mechanism including the wiring harnesses, which not only consumes the maintenance time but also increases the maintenance cost. Therefore, either materials of the male-end connecting mechanism 10 and the female-end connecting mechanism 20, or a plugging mechanism, a locking mechanism and a sealing mechanism therebetween should be bearable to the disassembly and assembly for at least 10 times to meet the use requirements of the connecting mechanism.

In an embodiment, the weight of the female-end connecting mechanism 20 is less than or equal to 215 g. As illustrated in FIG. 1, the female-end connecting mechanism 20 is above the connecting mechanism, and plugged and fixed with the male-end connecting mechanism 10. The female-end connecting mechanism 20 is also under a large gravity when the weight thereof is too large, so that the whole connecting mechanism vibrates along with the vibration of the electrical appliance. Due to inertia, the female-end connecting mechanism 20 will be subjected to a large vibration, resulting in abnormal sound which is not allowed during the use of the electrical appliance.

In order to verify the influence of the weight of the female-end connecting mechanism 20 on the abnormal sound of the connecting mechanism, the inventor adopts the same male-end connecting mechanism 10 and the samples of the female-end connecting mechanism 20 with different weights which are assembled and mounted on a vibration test bench, and then carries out a vibration test to observe whether the female-end connecting mechanism 20 generates abnormal sound during the vibration test. The test results are shown in Table 9.

**Table 9: Influence of the weight of the female-end connecting mechanism 20 on the abnormal sound of the connecting mechanism**

| Weight (g) | 175 | 185 | 195 | 205 | 215 | 225 | 235 | 245 | 255 |
|---|---|---|---|---|---|---|---|---|---|
| Whether there is abnormal sound | No | No | No | No | No | Yes | Yes | Yes | Yes |

As can be seen from Table 9, when the weight of the female-end connecting mechanism 20 is greater than 215 g, abnormal sound is generated in the female-end connecting mechanism 20 during the vibration test, and the test result is unqualified. Therefore, the inventor selects that the weight of the female-end connecting mechanism 20 to be less than or equal to 215 g.

In an embodiment, the height of the female-end connecting mechanism 20 along the plugging and unplugging direction is less than or equal to 276 mm. After being assembled together, the male-end connecting mechanism 10 and the female-end connecting mechanism 20 should be mounted in the electrical appliance. However, space reserved in the electrical appliance is generally small, and when the female-end connecting mechanism 20 is high, it cannot be mounted into the electrical appliance and the raw material will be wasted. Therefore, the female-end connecting mechanism 20 should be lower than a certain height during the design.

In order to verify the influence of the height of the female-end connecting mechanism 20 along the plugging and unplugging direction on the mounting of the connecting mechanism, the inventor adopts the same male-end connecting mechanism 10 and the samples of the female-end connecting mechanism 20 with different heights along the plugging and unplugging direction which are assembled and mounted on the electrical appliance, and observes whether the female-end connecting mechanism 20 interferes with other parts of the electrical appliance during mounting. The test results are shown in Table 10.

**Table 10: Influence of the height of the female-end connecting mechanism 20 along the plugging and unplugging direction on the mounting of the connecting mechanism**

| | | | | | | | | | |
|---|---|---|---|---|---|---|---|---|---|
| Height (mm) | 236 | 246 | 256 | 266 | 276 | 286 | 296 | 306 | 316 |
| Whether there is interference | No | No | No | No | No | Yes | Yes | Yes | Yes |

As can be seen from Table 10, the female-end connecting mechanism 20 cannot be mounted in a designated position of the electrical appliance when the height thereof along the plugging and unplugging direction is greater than 276 mm, and the test result is unqualified. Thus, the inventor selects the height of the female-end connecting mechanism 20 along the plugging and unplugging direction to be less than or equal to 276 mm.

In an embodiment, at least part of the surface of the plug-in terminal 12 and/or the mating terminal 22 is provided with an electrically-conductive anticorrosion layer.

When the materials of the plug-in terminal 12 and the mating terminal 22 are not consistent, the electrical conduction therebetween will cause an electrochemical corrosion due to a potential difference, thereby reducing the service lives of the plug-in terminal 12 and the mating terminal 22. In order to reduce the electrochemical corrosion, at least part of the surfaces of the plug-in terminal 12 and/or the mating terminal 22 may be provided with an electrically-conductive anticorrosion layer, which may be made of a metal material with a potential between the potentials of the materials of the plug-in terminal 12 and the mating terminal 22, thereby isolating the plug-in terminal 12 and the mating terminal 22 from each other, slowing down the electrochemical corrosion, and prolonging the service lives of the plug-in terminal 12 and the mating terminal 22.

In the connection between the plug-in terminal 12 and the mating terminal 22, the electrically-conductive anticorrosion layer can reduce the electrochemical reaction between the plug-in terminal 12 and the mating terminal 22, and solve the technical problem that a flat belt can only be connected to other terminals or electrical appliances through terminals made of other materials.

Further, the electrically-conductive anticorrosion layer is attached to at least part of the surface of the plug-in terminal 12 and/or the mating terminal 22 by one or more of electroplating, electroless plating, magnetron sputtering, vacuum plating, pressure welding, diffusion welding, friction welding, resistance welding, ultrasonic welding or laser welding.

The electroplating is a process of plating a thin layer of other metal or alloy on a surface of some metal by using a principle of electrolysis.

The electroless plating is a deposition process in which a metal is produced through a controllable oxidation-reduction reaction under a metal catalytic action.

The magnetron sputtering is to use an interaction between a magnetic field and an electric field to make electrons move spirally near a target surface, thereby increasing the probability that the electrons bombard argon to generate ions. The generated ions bombard the target surface under the action of the electric field so as to sputter a target material.

The vacuum plating is to deposit various metal and non-metal films on the surface of a molded piece by means of distillation or sputtering under vacuum conditions.

The pressure welding is a method of applying a pressure to the workpieces to be welded to make joint surfaces closely contact and produce certain plastic deformation to complete the welding.

The friction welding refers to a method of welding by taking heat generated by the friction between contact surfaces of workpieces as a heat source to plastically deform the workpieces under pressure.

The resistance welding refers to a method of welding by using strong current to pass through a contact point between an electrode and a workpiece and generating heat by a contact resistance.

The ultrasonic welding is to transmit high-frequency vibration waves to the surfaces of two objects to be welded, so that under pressure, the surfaces of the two objects rub against each other to fuse molecular layers.

The laser welding is an efficient and precise welding method using a laser beam of a high energy density as a heat source.

The diffusion welding refers to a solid-state welding method that pressurizes the workpieces at a high temperature without visible deformation and relative movement. The electrically-conductive anticorrosion layer can be stably disposed on at least part of the surface of the plug-in terminal 12 and/or the mating terminal 22 by adopting one of the above modes or combinations thereof.

In an embodiment, the electrically-conductive anticorrosion layer has a thickness of 0.3 µm to 3000 µm.

In an embodiment, the electrically-conductive anticorrosion layer has a thickness of 2.5 µm to 1000 µm.

In order to verify the influence of different thicknesses of the electrically-conductive anticorrosion layer on a voltage drop, the inventor adopts the plug-in terminal 12 and the mating terminal 22 of the same material and structure, disposes the electrically-conductive anticorrosion layers with different thicknesses on at least part of the surfaces of the plug-in terminal 12 and the mating terminal 22, respectively, and tests the voltage drop after the plugging between the plug-in terminal 12 and the mating terminal 22. The results are shown in Table 11.

In this embodiment, it is unqualified when the voltage drop after the plugging between the plug-in terminal 12 and the mating terminal 22 is greater than 4 mV.

**Table 11: Influence of different thicknesses of the electrically-conductive anticorrosion layer on the voltage drop (mV)**

| Thickness of the electrically-conductive anticorrosion layer (µm) | | | | | | | | | | | | | | | |
|---|---|---|---|---|---|---|---|---|---|---|---|---|---|---|---|
| | 0.2 | 0.3 | 1 | 2.5 | 5 | 10 | 50 | 100 | 300 | 500 | 800 | 1000 | 2000 | 3000 | 4000 |

| Serial No. | Voltage drop after plugging (mV) | | | | | | | | | | | | | | |
|---|---|---|---|---|---|---|---|---|---|---|---|---|---|---|---|
| 1 | 4.2 | 3.4 | 3.3 | 3.1 | 3.2 | 3.4 | 3.5 | 3.7 | 3.6 | 3.7 | 3.8 | 3.8 | 3.8 | 3.8 | 4.2 |
| 2 | 4.1 | 3.4 | 3.3 | 3.2 | 3.3 | 3.5 | 3.6 | 3.5 | 3.6 | 3.6 | 3.7 | 3.8 | 3.9 | 3.9 | 4.2 |
| 3 | 4.2 | 3.4 | 3.2 | 3.1 | 3.2 | 3.4 | 3.5 | 3.7 | 3.5 | 3.7 | 3.8 | 3.8 | 3.8 | 3.8 | 4.1 |
| 4 | 4.2 | 3.5 | 3.4 | 3.1 | 3.3 | 3.4 | 3.6 | 3.6 | 3.7 | 3.7 | 3.8 | 3.8 | 3.8 | 3.9 | 4.0 |
| 5 | 4.2 | 3.4 | 3.3 | 3.2 | 3.2 | 3.5 | 3.5 | 3.5 | 3.6 | 3.8 | 3.8 | 3.7 | 3.8 | 3.9 | 4.1 |
| 6 | 4.1 | 3.4 | 3.2 | 3.2 | 3.3 | 3.4 | 3.4 | 3.6 | 3.6 | 3.7 | 3.7 | 3.7 | 3.7 | 3.9 | 4.2 |
| 7 | 4.2 | 3.5 | 3.3 | 3.1 | 3.2 | 3.6 | 3.5 | 3.7 | 3.7 | 3.7 | 3.7 | 3.8 | 3.8 | 3.8 | 4.2 |
| 8 | 4.1 | 3.4 | 3.4 | 3.1 | 3.3 | 3.4 | 3.6 | 3.6 | 3.6 | 3.8 | 3.7 | 3.7 | 3.9 | 3.9 | 4.1 |
| 9 | 4.2 | 3.5 | 3.2 | 3.2 | 3.3 | 3.3 | 3.5 | 3.5 | 3.8 | 3.7 | 3.8 | 3.8 | 3.9 | 3.9 | 4.1 |
| 10 | 4.2 | 3.6 | 3.3 | 3.1 | 3.1 | 3.4 | 3.5 | 3.6 | 3.6 | 3.7 | 3.7 | 3.7 | 3.8 | 3.8 | 4.1 |
| Average value | 4.16 | 3.45 | 3.29 | 3.13 | 3.24 | 3.42 | 3.52 | 3.60 | 3.64 | 3.71 | 3.75 | 3.76 | 3.82 | 3.86 | 4.13 |

As can be seen from the data in Table 11, when the thickness of the electrically-conductive anticorrosion layer is greater than 3000 µm and less than 0.3 µm, the voltage drop of the plugged structure of the plug-in terminal 12 and the mating terminal 22 is greater than 4 mV, which does not meet the requirement. Therefore, the inventor selects the thickness of the electrically-conductive anticorrosion layer to be 0.3 µm to 3000 µm. In which, when the thickness of the electrically-conductive anticorrosion layer is in a range of 2.5 µm to 1000 µm, the voltage drop of the plugged structure of the plug-in terminal 12 and the mating terminal 22 is an optimal value, so the inventor exemplarily selects the thickness of the electrically-conductive anticorrosion layer to be 2.5 µm to 1000 µm.

In an embodiment, the material of the electrically-conductive anticorrosion layer includes one or more of nickel, cadmium, manganese, zirconium, cobalt, tin, titanium, chromium, gold, silver, zinc, tin-lead alloy, silver-antimony alloy, palladium, palladium-nickel alloy, graphite silver, graphene silver, hard silver and silver-gold-zirconium alloy.

Exemplarily, the potential of the material of the electrically-conductive anticorrosion layer is between the potentials of the materials of the plug-in terminal 12 and the mating terminal 22. This solution can reduce the electrochemical corrosion generated after the plugging between the plug-in terminal 12 and the mating terminal 22.

Next, taking the plug-in terminal 12 and the mating terminal 22 as an example, the plug-in terminal 12 and the mating terminal 22 are provided with the electrically-conductive anticorrosion layers. In order to verify the influence of different electrically-conductive anticorrosion materials on the performances of the plug-in terminal 12 and the mating terminal 22, the inventor adopts the same specification and material, and utilizes the plug-in terminal 12 and the mating terminal 22 of different electrically-conductive anticorrosion materials to carry out a series of tests on the corrosion resistance time, and the test results are shown in Table 12.

The test on the corrosion resistance time in Table 12 is to put the samples of the plug-in terminal 12 and the mating terminal 22 into a salt spray test chamber, spray salt fog for each position on the plug-in terminal 12 and the mating terminal 22, take out and clean the samples every 20 hours to observe the surface corrosions thereof, which is a cycle, stop the test when a corrosion area of the surface of each of the samples of the plug-in terminal 12 and the mating terminal 22 is more than 10% of a total area thereof, and then record the number of cycles at that time. In this embodiment, the number of cycles less than 80 is unqualified.

**Table 12: Influence of different materials of the electrically-conductive anticorrosion layer on the corrosion resistance of the samples of the plug-in terminal 12 and the mating terminal 22**

| Different materials of the electrically-conductive anticorrosion layer | | | | | | | | | |
|---|---|---|---|---|---|---|---|---|---|
| Nicke 1 | Cadmiu m | Manganes e | Zirconiu m | Cobalt | Tin | Titanium | Zinc | Chrome | |
| Number of cycles of corrosion resistance tests | | | | | | | | | |
| 89 | 128 | 121 | 128 | 129 | 85 | 123 | 85 | 109 | |
| | | | | | | | | | |

| Different materials of the electrically-conductive anticorrosion layer | | | | | | | | | |
|---|---|---|---|---|---|---|---|---|---|
| Gold | Silver | Silver-antimony alloy | Graphite silver | Graphen e silver | Silver-gold-zirconiu m alloy | Palladiu m | Palladium -nickel alloy | Tin-lead allo y | Hard silve r |
| Number of cycles of corrosion resistance tests | | | | | | | | | |
| 136 | 129 | 123 | 136 | 127 | 134 | 113 | 122 | 116 | 139 |

As can be seen from Table 12, when the material of the electrically-conductive anticorrosion layer includes conventional metals such as tin, nickel and zinc, the test results are not as good as those of other metals, because the test results of other metals far exceed the standard values, and the performances are stable. Therefore, the inventor selects that the material of the electrically-conductive anticorrosion layer includes (or is) one or more of nickel, cadmium, manganese, zirconium, cobalt, tin titanium, chromium, gold, silver, zinc-tin-lead alloy, silver-antimony alloy, palladium, palladium-nickel alloy, graphite silver, graphene silver, hard silver and silver-gold-zirconium alloy. More exemplarily, the material of the electrically-conductive anticorrosion layer includes (or is) one or more of cadmium, manganese, zirconium, cobalt, titanium, chromium, gold, silver, tin-lead alloy, silver-antimony alloy, palladium, palladium-nickel alloy, graphite silver, graphene silver, hard silver and silver-gold-zirconium alloy.

In an embodiment, the electrically-conductive part of the first cable 11 is integrally formed with the plug-in terminal 12. The electrically-conductive part of the first cable 11 and the plug-in terminal 12 may be made of the same material, that is, the electrically-conductive part of the first cable 11 is extended and molded as the plug-in terminal 12, thereby saving the use of the plug-in terminal 12, reducing the material cost and the processing time, and molding the front end of the electrically-conductive part of the first cable 11 into various shapes as required, without considering the assembly problem.

In an embodiment, the electrically-conductive part of the second cable 21 is integrally formed with the mating terminal 22. The electrically-conductive part of the second cable 21 and the mating terminal 22 may be made of the same material, that is, the electrically-conductive part of the second cable 21 is extended and molded as the mating terminal 22, thereby saving the use of the mating terminal 22, reducing the material cost and the processing time, and molding the front end of the electrically-conductive part of the second cable 21 into various shapes as required, without considering the assembly problem.

The present disclosure further discloses an electrical energy transmission apparatus, which includes the high-voltage connecting mechanism.

The present disclosure further discloses a motor vehicle, which includes the high-voltage connecting mechanism and the electrical energy transmission apparatus.

The high-voltage connecting mechanism in the present disclosure is provided with the male-end shielding shell and the female-end shielding shell which are injection-molded, so that the processing is simple, and the cost is much lower than that of a metal shielding shell. By means of plugging cooperation between the male-end shielding shell and the female-end shielding shell, as well as the electrical connection with the shielding net of the cable, an electromagnetic interference in the high-voltage connecting mechanism can be effectively shielded, and an electromagnetic interference on other devices can be reduced.

The male-end shielding shell and the female-end shielding shell in the present disclosure are connected to the shielding layer of the cable in various ways, so that the shielding shell and the shielding layer can be effectively connected, thereby achieving a good shielding effect.

The terminal and the cable of the present disclosure are integrally injection-molded in the male-end housing and the female-end housing, and there is no need for works such as terminal plugging, so that the processing procedures and the production cost are reduced. In addition, the male-end housing and the female-end housing which are integrally injection-molded are simple in structure without requiring a high-precision injection mold, and have a good insulation effect owing to the complete sealing.

The mating terminal may be plugged and matched with the plug-in terminal, and the plug-in portion or the mating portion is composed of a plurality of layers of terminal laminations in a stacked distribution, with a front end of the sheet-shaped terminal pluggable into the banded groove. In addition, the problem of deformation and elasticity weakening caused by the excessive thickness of the metal plate can be alleviated through the structure of the banded groove, and a large contact area can be realized, thereby ensuring the connection reliability and the electrical conduction effect. The mating terminal and the plug-in terminal can ensure the stability of the clamping structure, reduce the deformation and increase the strength of the plugged structure.

The embedded high-voltage interlocking structure replaces the traditional assembled high-voltage interlocking structure, and is fixed in the connector by integral injection-molding without assembling, so that the cost is reduced and the high-voltage interlocking effect is completely satisfied.

The seal structure of the connector is no longer a separate seal ring, but adopts a secondarily injection-molded seal structure to replace the traditional seal ring, so as to be directly molded on the connector, and achieve a better injection bonding and a lower cost.

By adopting the temperature measuring structure, it is possible to separately monitor the terminal temperature inside the connector, and avoid the situation that the temperature of the connector cannot be monitored due to the damage of the temperature sensors in other positions.

## Claims

1. A high-voltage connecting mechanism, comprising a male-end connecting mechanism (10) and a female-end connecting mechanism (20), wherein the male-end connecting mechanism (10) comprises a first cable (11), a plug-in terminal (12), a male-end housing (13) integrally injection-molded with the first cable (11) and the plug-in terminal (12), and a male-end shielding shell (14) disposed outside the male-end housing (13); the female-end connecting mechanism (20) comprises a mating terminal (22), a second cable (21), a female-end housing (23) integrally injection-molded with the second cable (21) and the mating terminal (22), and a female-end shielding shell (24) disposed outside the female-end housing (23); the male-end connecting mechanism (10) and the female-end connecting mechanism (20) are electrically connected through the mating of the mating terminal (22) and the plug-in terminal (12), the male-end housing (13) is connected to the female-end housing (23), and the male-end shielding shell (14) is connected to the female-end shielding shell (24);
**characterized in that**, an inner surface of the male-end shielding shell (14) is provided with a first conductive elastic piece (33), the first cable (11) comprises a first shielding layer (31), and the first conductive elastic piece (33) is connected to the first shielding layer (31) and applies a pressure to the first shielding layer (31); and an inner surface of the female-end shielding shell (24) is provided with a second conductive elastic piece (36), the second cable (21) comprises a second shielding layer (34), and the second conductive elastic piece (36) is connected to the second shielding layer (34) and applies a pressure to the second shielding layer (34); and wherein
the plug-in terminal (12) comprises a first fixing portion (121) and a plug-in portion (122) , which are sequentially disposed, the first fixing portion (121) is electrically connected to an electrically-conductive part of the first cable (11), and the mating terminal (22) comprises a second fixing portion (221) and a mating portion (222) which are sequentially disposed, the second fixing portion (221) is electrically connected to an electrically-conductive part of the second cable (21), the plug-in portion (122) or the mating portion (222) is formed by stacking multi-layer terminal laminations, and the plug-in portion (122) is provided with a first clamping groove (1221), which is matched and plugged with the sheet-shaped mating portion (222); or the mating portion (222) is provided with a second clamping groove (2221), which is matched and plugged with the sheet-shaped plug-in portion (122).

2. The high-voltage connecting mechanism according to claim 1, wherein the first cable (11) comprises a first shielding layer (31), and at least part of the male-end shielding shell (14) is electrically connected to at least part of the first shielding layer (31); and the second cable (21) comprises a second shielding layer (34), and at least part of the female-end shielding shell (24) is electrically connected to at least part of the second shielding layer (34).

3. The high-voltage connecting mechanism according to claim 1, wherein the pressure applied by the first conductive elastic piece (33) onto the first shielding layer (31) ranges from 0.3 N to 95 N; and the pressure applied by the second conductive elastic piece (36) on to the second shielding layer (34) ranges from 0.3 N to 95 N.

4. The high-voltage connecting mechanism according to claim 1, wherein the first cable (11) comprises a first shielding layer (31), an impedance between the male-end shielding shell (14) and the first shielding layer (31) is less than 80 mΩ; and the second cable (21) comprises a second shielding layer (34), and an impedance between the female-end shielding shell (24) and the second shielding layer (34) is less than 80 mΩ.

5. The high-voltage connecting mechanism according to claim 4, wherein the plug-in portion (122) is sheet-shaped, at least part of which protrudes from the male-end housing (13); or
at least part of the first clamping groove (1221) protrudes from an outer wall of the male-end housing (13), or the male-end housing (13) is provided with a first open boss, in which at least part of the plug-in portion (122) is disposed; or
the male-end shielding shell (14) wraps at least part of the male-end housing (13), the male-end shielding shell (14) is provided with an opening, and the plug-in portion (122) extends from or is located inside the opening.

6. The high-voltage connecting mechanism according to claim 1, wherein the male-end connecting mechanism (10) comprises an interlocking connector (15), at least part of which is integrally injection-molded in the male-end housing (13).

7. The high-voltage connecting mechanism according to claim 1, wherein an outer periphery of the first clamping groove (1221) or an outer periphery of the second clamping groove (2221) is sleeved by a clip (50), which is made of a memory alloy; optionally
a transformation temperature of the memory alloy is set in a range of 40°C to 70°C, when a temperature of the clip(50) is lower than the transformation temperature, the clip (50) is in an expanded state, and when the temperature of the clip (50) is higher than the transformation temperature, the clip (50) is in a clamped state; or
the mating portion (222) is sheet-shaped, and at least part thereof protrudes from the female-end housing (23), or the female-end housing (23) is provided with a second accommodating cavity, and at least part of the mating portion (222) protrudes from a bottom surface of the second accommodating cavity without exceeding the female-end housing (23); or
the mating portion (222) is provided with a second clamping groove (2221), at least part of which protrudes from an outer wall of the female-end housing (23), or the female-end housing (23) is provided with a second open boss in which at least part of the mating portion (222) is disposed; optionally
the terminal lamination comprises a terminal fixing portion (40), to which the first clamping groove (1221) or the second clamping groove (2221) is fixedly connected.

8. The high-voltage connecting mechanism according to claim 1, wherein an outer periphery of the first clamping groove (1221) or an outer periphery of the second clamping groove (2221) is sleeved by a clip (50), which comprises a sidewall (51) and an elastic element (52) fixed thereon, and the elastic element (52) is in contacted connection with the first clamping groove (1221) or the second clamping groove (2221).

9. The high-voltage connecting mechanism according to claim 8, wherein a force applied by the elastic element (52) to the first clamping groove (1221) or the second clamping groove (2221) ranges from 3 N to 200 N; or
the elastic element (52) is an elastic rubber body, a spring or a metal elastic piece.

10. The high-voltage connecting mechanism according to claim 1, wherein the plug-in portion (122) is sheet-shaped, the male-end housing (13) is provided with a first accommodating cavity and at least part of the plug-in portion (122) protrudes from a bottom surface of the first accommodating cavity without exceeding the male-end housing (13).

11. An electrical energy transmission apparatus, comprising the high-voltage connecting mechanism according to any one of claims 1 to 10.

12. A motor vehicle, comprising the high-voltage connecting mechanism according to any one of claims 1 to 10.

## Patentansprüche

1. Hochspannungsverbindungsmechanismus, aufweisend einen Steckverbindungsmechanismus (10) und einen Buchsenverbindungsmechanismus (20), wobei der Steckverbindungsmechanismus (10) ein erstes Kabel (11), einen Steckanschluss (12), ein Steckergehäuse (13), das einstückig mit dem ersten Kabel (11) und dem Steckanschluss (12) spritzgegossen ist, und eine Stecker-Abschirmhülse (14) aufweist, die außerhalb des Steckergehäuses (13) angeordnet ist; der Buchsenverbindungsmechanismus (20) einen Gegenkontaktanschluss (22), ein zweites Kabel (21) und ein Buchsengehäuse (23), das einstückig mit dem zweiten Kabel (21) und dem Gegenkontaktanschluss (22) spritzgegossen ist, sowie eine Buchsen-Abschirmhülse (24) aufweist, die außerhalb des Buchsengehäuses (23) angeordnet ist; der Steckverbindungsmechanismus (10) und der Buchsenverbindungsmechanismus (20) durch das Zusammenstecken des Gegenkontaktanschlusses (22) und des Steckanschlusses (12) elektrisch verbunden sind, das Steckergehäuse (13) mit dem Buchsengehäuse (23) verbunden ist, und die Stecker-Abschirmhülse (14) mit der Buchsen-Abschirmhülse (24) verbunden ist;
**dadurch gekennzeichnet, dass** eine Innenfläche der Stecker-Abschirmhülse (14) mit einem ersten leitfähigen elastischen Element (33) versehen ist, das erste Kabel (11) eine erste Abschirmschicht (31) aufweist und das erste leitfähige elastische Element (33) mit der ersten Abschirmschicht (31) verbunden ist und einen Druck auf die erste Abschirmschicht (31) ausübt; und eine Innenfläche der Buchsen-Abschirmhülse (24) mit einem zweiten leitfähigen elastischen Element (36) versehen ist, das zweite Kabel (21) eine zweite Abschirmschicht (34) aufweist und das zweite leitfähige elastische Element (36) mit der zweiten Abschirmschicht (34) verbunden ist und einen Druck auf die zweite Abschirmschicht (34) ausübt; und wobei
der Steckanschluss (12) einen ersten Befestigungsabschnitt (121) und einen Steckabschnitt (122) aufweist, die nacheinander angeordnet sind, der erste Befestigungsabschnitt (121) elektrisch mit einem elektrisch leitenden Teil des ersten Kabels (11) verbunden ist, und der Gegenkontaktanschluss (22) einen zweiten Befestigungsabschnitt (221) und einen Gegenabschnitt (222) aufweist, die nacheinander angeordnet sind, wobei der zweite Befestigungsabschnitt (221) elektrisch mit einem elektrisch leitenden Teil des zweiten Kabels (21) verbunden ist, der Steckabschnitt (122) oder der Gegenabschnitt (222) durch Stapeln mehrschichtiger Anschlusslaminate gebildet ist, und der Steckabschnitt (122) mit einer ersten Klemmnut (1221) versehen ist, die mit dem plattenförmigen Gegenabschnitt (222) zusammenpasst und in diesen eingesteckt ist; oder der Gegenabschnitt (222) mit einer zweiten Klemmnut (2221) versehen ist, die mit dem plattenförmigen Steckabschnitt (122) zusammenpasst und in diesen eingesteckt ist.

2. Hochspannungsverbindungsmechanismus nach Anspruch 1, bei dem das erste Kabel (11) eine erste Abschirmschicht (31) aufweist und zumindest ein Teil der Stecker-Abschirmhülse (14) elektrisch mit zumindest einem Teil der ersten Abschirmschicht (31) verbunden ist; und das zweite Kabel (21) eine zweite Abschirmschicht (34) aufweist und zumindest ein Teil der Buchsen-Abschirmhülse (24) elektrisch mit zumindest einem Teil der zweiten Abschirmschicht (34) verbunden ist.

3. Hochspannungsverbindungsmechanismus nach Anspruch 1, bei dem der von dem ersten leitfähigen elastischen Element (33) auf die erste Abschirmschicht (31) ausgeübte Druck im Bereich von 0,3 N bis 95 N liegt; und der von dem zweiten leitfähigen elastischen Element (36) auf die zweite Abschirmschicht (34) ausgeübte Druck im Bereich von 0,3 N bis 95 N liegt.

4. Hochspannungsverbindungsmechanismus nach Anspruch 1, bei dem das erste Kabel (11) eine erste Abschirmschicht (31) aufweist, die Impedanz zwischen der Stecker-Abschirmhülse (14) und der ersten Abschirmschicht (31) weniger als 80 mΩ beträgt; und das zweite Kabel (21) eine zweite Abschirmschicht (34) aufweist und eine Impedanz zwischen der Buchsen-Abschirmhülse (24) und der zweiten Abschirmschicht (34) weniger als 80 mΩ beträgt.

5. Hochspannungsverbindungsmechanismus nach Anspruch 4, bei dem der Steckabschnitt (122) plattenförmig ist, wobei zumindest ein Teil davon aus dem Steckergehäuse (13) herausragt; oder
mindestens ein Teil der ersten Klemmnut (1221) aus einer Außenwand des Steckergehäuses (13) herausragt, oder das Steckergehäuse (13) mit einem ersten offenen Vorsprung versehen ist, in dem mindestens ein Teil des Steckabschnitts (122) angeordnet ist; oder
die Stecker-Abschirmhülse (14) zumindest einen Teil des Steckergehäuses (13) umschließt, die Stecker-Abschirmhülse (14) mit einer Öffnung versehen ist und sich der Steckabschnitt (122) aus der Öffnung erstreckt oder sich innerhalb der Öffnung befindet.

6. Hochspannungsverbindungsmechanismus nach Anspruch 1, bei dem der Steckverbindungsmechanismus (10) einen Verriegelungsstecker (15) aufweist, von dem zumindest ein Teil einstückig in das Steckergehäuse (13) spritzgegossen ist.

7. Hochspannungsverbindungsmechanismus nach Anspruch 1, bei dem ein Außenumfang der ersten Klemmnut (1221) oder ein Außenumfang der zweiten Klemmnut (2221) von einer Klammer (50) ummantelt ist, die aus einer Formgedächtnislegierung besteht; optional
die Umwandlungstemperatur der Formgedächtnislegierung in einem Bereich von 40 °C bis 70 °C festgelegt ist, wobei sich die Klammer (50) in einem expandierten Zustand befindet, wenn ihre Temperatur unterhalb der Umwandlungstemperatur liegt, und sich die Klammer (50) in einem geklemmten Zustand befindet, wenn ihre Temperatur oberhalb der Umwandlungstemperatur liegt; oder
der Gegenabschnitt (222) plattenförmig ist und zumindest ein Teil davon aus dem Buchsengehäuse (23) herausragt, oder das Buchsengehäuse (23) mit einem zweiten Aufnahmeraum versehen ist und zumindest ein Teil des Gegenabschnitts (222) aus einer Bodenfläche des zweiten Aufnahmeraums herausragt, ohne das Buchsengehäuse (23) zu überragen; oder
der Gegenabschnitt (222) mit einer zweiten Klemmnut (2221) versehen ist, von der zumindest ein Teil aus einer Außenwand des Buchsengehäuses (23) herausragt, oder das Buchsengehäuse (23) mit einem zweiten offenen Vorsprung versehen ist, in dem zumindest ein Teil des Gegenabschnitts (222) angeordnet ist; optional
die Anschlusslaminierung einen Anschlussbefestigungsabschnitt (40) aufweist, mit dem die erste Klemmnut (1221) oder die zweite Klemmnut (2221) fest verbunden ist.

8. Hochspannungsverbindungsmechanismus nach Anspruch 1, bei dem ein Außenumfang der ersten Klemmnut (1221) oder ein Außenumfang der zweiten Klemmnut (2221) von einer Klammer (50) ummantelt ist, die eine Seitenwand (51) und ein daran befestigtes elastisches Element (52) aufweist, und das elastische Element (52) in Kontaktverbindung mit der ersten Klemmnut (1221) oder der zweiten Klemmnut (2221) steht.

9. Hochspannungsverbindungsmechanismus nach Anspruch 8, bei dem eine von dem elastischen Element (52) auf die erste Klemmnut (1221) oder die zweite Klemmnut (2221) ausgeübte Kraft im Bereich von 3 N bis 200 N liegt; oder
das elastische Element (52) ein elastischer Gummikörper, eine Feder oder ein elastisches Metallstück ist.

10. Hochspannungsverbindungsmechanismus nach Anspruch 1, bei dem der Steckabschnitt (122) plattenförmig ist, das Steckergehäuse (13) mit einem ersten Aufnahmeraum versehen ist und zumindest ein Teil des Steckabschnitts (122) aus einer Bodenfläche des ersten Aufnahmeraums des Steckergehäuses (13) herausragt, ohne das Steckergehäuse (13) zu überragen.

11. Elektrische Energieübertragungsvorrichtung, aufweisend den Hochspannungsverbindungsmechanismus gemäß einem der Ansprüche 1 bis 10.

12. Kraftfahrzeug, das den Hochspannungsverbindungsmechanismus gemäß einem der Ansprüche 1 bis 10 aufweist.

## Revendications

1. Mécanisme de connexion à haute tension, comprenant un mécanisme de connexion mâle (10) et un mécanisme de connexion femelle (20), le mécanisme de connexion mâle (10) comprenant un premier câble (11), une connecteur mâle (12), un boîtier de connecteur mâle (13) moulé par injection d'un seul tenant avec le premier câble (11) et la connecteur mâle (12), et une douille de blindage de la fiche (14) disposée à l'extérieur du boîtier de connecteur mâle (13); le mécanisme de connexion femelle (20) comportant une connecteur femelle (22), un deuxième câble (21) et un boîtier de connecteur femelle (23) moulé par injection d'un seul tenant avec le deuxième câble (21) et la connecteur femelle (22), ainsi qu'une douille de blindage de la prise (24) disposé à l'extérieur du boîtier de connecteur femelle (23); le mécanisme de connexion mâle (10) et le mécanisme de connexion femelle (20) sont reliés électriquement par l'emboîtement de la connecteur femelle (22) et de la connecteur mâle (12), le boîtier de connecteur mâle (13) est relié au boîtier de connecteur femelle (23), et la douille de blindage de la fiche (14) est reliée à la douille de blindage de la prise (24);
**caractérisé en ce qu'**une surface intérieure de la douille de blindage de la fiche (14) est pourvue d'un premier élément élastique conducteur (33), le premier câble (11) comporte une première couche de blindage (31) et le premier élément élastique conducteur (33) est relié à la première couche de blindage (31) et exerce une pression sur la première couche de blindage (31); et une surface intérieure de la douille de blindage de la prise (24) est pourvue d'un deuxième élément élastique conducteur (36), le deuxième câble (21) comporte une deuxième couche de blindage (34) et le deuxième élément élastique conducteur (36) est relié à la deuxième couche de blindage (34) et exerce une pression sur la deuxième couche de blindage (34); et dans lequel
le connecteur mâle (12) comporte une première partie de fixation (121) et une partie d'enfichage (122) disposées l'une à la suite de l'autre, la première partie de fixation (121) étant reliée électriquement à une partie électriquement conductrice du premier câble (11), et le connecteur femelle (22) comporte une deuxième partie de fixation (221) et une partie complémentaire (222) disposées l'une à la suite de l'autre, la deuxième partie de fixation (221) étant reliée électriquement à une partie électriquement conductrice du deuxième câble (21), la partie d'enfichage (122) ou la partie complémentaire (222) étant formée par l'empilement d'un laminé de connexion multicouche, et la partie d'enfichage (122) étant pourvue d'une première rainure de serrage (1221) qui s'adapte à la partie complémentaire (222) en forme de plaque et s'y enfiche; ou la partie complémentaire (222) est pourvue d'une deuxième rainure de serrage (2221) qui s'adapte à la partie d'enfichage (122) en forme de plaque et y est enfichée.

2. Mécanisme de connexion à haute tension selon la revendication 1, dans lequel le premier câble (11) comporte une première couche de blindage (31) et au moins une partie de la douille de blindage de la fiche (14) est reliée électriquement à au moins une partie de la première couche de blindage (31); et le deuxième câble (21) comporte une deuxième couche de blindage (34) et au moins une partie de la douille de blindage de la prise (24) est reliée électriquement à au moins une partie de la deuxième couche de blindage (34).

3. Mécanisme de connexion à haute tension selon la revendication 1, dans lequel la pression exercée par le premier élément élastique conducteur (33) sur la première couche de blindage (31) est comprise entre 0,3 N et 95 N ; et la pression exercée par le deuxième élément élastique conducteur (36) sur la deuxième couche de blindage (34) est comprise entre 0,3 N et 95 N.

4. Mécanisme de connexion à haute tension selon la revendication 1, dans lequel le premier câble (11) comporte une première couche de blindage (31), l'impédance entre la douille de blindage de la fiche (14) et la première couche de blindage (31) est inférieure à 80 mΩ ; et le deuxième câble (21) comporte une deuxième couche de blindage (34) et l'impédance entre la douille de blindage de la prise (24) et la deuxième couche de blindage (34) est inférieure à 80 mΩ.

5. Mécanisme de connexion à haute tension selon la revendication 4, dans lequel la partie d'enfichage (122) est en forme de plaque, au moins une partie de celle-ci faisant saillie hors du boîtier de connecteur mâle (13); ou
au moins une partie de la première rainure de serrage (1221) fait saillie hors d'une paroi extérieure du boîtier de connecteur mâle (13), ou le boîtier de connecteur mâle (13) est muni d'une première saillie ouverte dans laquelle est disposée au moins une partie de la partie d'enfichage (122); ou
la douille de blindage de la fiche (14) entoure au moins une partie du boîtier de connecteur mâle (13), la douille de blindage de la fiche (14) est pourvue d'une ouverture et la partie d'enfichage (122) s'étend hors de l'ouverture ou se trouve à l'intérieur de l'ouverture.

6. Mécanisme de connexion à haute tension selon la revendication 1, dans lequel le mécanisme de connexion mâle (10) comprend une fiche de verrouillage (15) dont au moins une partie est moulée par injection d'un seul tenant dans le boîtier de connecteur mâle (13).

7. Mécanisme de connexion à haute tension selon la revendication 1, dans lequel une périphérie extérieure de la première rainure de serrage (1221) ou une périphérie extérieure de la deuxième rainure de serrage (2221) est recouverte d'une pince (50) constituée d'un alliage à mémoire de forme; en option
la température de transition de l'alliage à mémoire de forme est fixée dans une plage de 40 °C à 70 °C, la pince (50) se trouvant dans un état expansé lorsque sa température est inférieure à la température de transition, et la pince (50) se trouvant dans un état serré lorsque sa température est supérieure à la température de transition; ou
la partie complémentaire (222) est en forme de plaque et au moins une partie de celle-ci fait saillie hors du boîtier de connecteur femelle (23), ou le boîtier de connecteur femelle (23) est muni d'un deuxième espace de réception et au moins une partie complémentaire (222) dépasse d'une surface inférieure du deuxième espace de réception sans dépasser du boîtier de connecteur femelle (23); ou
la partie complémentaire (222) est pourvue d'une deuxième rainure de serrage (2221) dont au moins une partie dépasse d'une paroi extérieure du boîtier de connecteur femelle (23), ou le boîtier de connecteur femelle (23) est pourvu d'une deuxième saillie ouverte dans laquelle au moins une partie de la partie complémentaire (222) est disposée; en option
le laminage de connexion comporte une partie de fixation de connexion (40) à laquelle la première rainure de serrage (1221) ou la deuxième rainure de serrage (2221) est solidement reliée.

8. Mécanisme de connexion à haute tension selon la revendication 1, dans lequel une périphérie extérieure de la première rainure de serrage (1221) ou une périphérie extérieure de la deuxième rainure de serrage (2221) est enveloppée par une pince (50) qui comporte une paroi latérale (51) et un élément élastique (52) fixé à celle-ci, et l'élément élastique (52) est en contact avec la première rainure de serrage (1221) ou la deuxième rainure de serrage (2221).

9. Mécanisme de connexion à haute tension selon la revendication 8, dans lequel une force exercée par l'élément élastique (52) sur la première rainure de serrage (1221) ou la deuxième rainure de serrage (2221) est comprise entre 3 N et 200 N; ou
l'élément élastique (52) est un corps en caoutchouc élastique, un ressort ou une pièce métallique élastique.

10. Mécanisme de connexion à haute tension selon la revendication 1, dans lequel la partie d'enfichage (122) est en forme de plaque, le boîtier de connecteur mâle (13) est muni d'un premier espace de réception et au moins une partie de la partie d'enfichage (122) fait saillie hors d'une surface inférieure du premier espace de réception du boîtier de connecteur mâle (13) sans dépasser du boîtier de connecteur mâle (13).

11. Appareil de transmission d'énergie électrique comprenant le mécanisme de connexion à haute tension selon l'une des revendications 1 à 10.

12. Véhicule à moteur comportant le mécanisme de connexion à haute tension selon l'une des revendications 1 à 10.
